# EUROPEAN PATENT APPLICATION

(11) **EP 4 471 069 A1**
(43) Date of publication of application: **04.12.2024**
(21) Application number: 22924009.8
(22) Date of filing: 17.10.2022
(51) Int. Cl.: C08F 10/00, C08F 4/654

(54) **SOLID CATALYST COMPONENT FOR OLEFIN POLYMERIZATION AND PRODUCTION METHOD THEREFOR, METHOD FOR PRODUCING CATALYST FOR OLEFIN POLYMERIZATION, AND METHOD FOR PRODUCING OLEFIN POLYMER**

(30) Priority: 28.01.2022 JP 2022011861
(71) Applicant: TOHO TITANIUM CO., LTD., Chigasaki-shi, Kanagawa 253-8510 (JP)
(72) Inventor: GOTO Keisuke, Chigasaki-shi, Kanagawa 253-8510 (JP); UOZUMI Toshiya, Chigasaki-shi, Kanagawa 253-8510 (JP); KONO Hiroyuki, Chigasaki-shi, Kanagawa 253-8510 (JP); MARUI Shinta, Chigasaki-shi, Kanagawa 253-8510 (JP); YOSHIZAKI Chika, Chigasaki-shi, Kanagawa 253-8510 (JP)
(74) Representative: Müller-Boré & Partner Patentanwälte PartG mbB
(86) International application number: PCT/JP2022/038569
(87) International publication number: WO 2023/145153

(57) **Abstract**

A solid catalyst component for olefin polymerization containing magnesium, titanium, a halogen, a carbonate compound (A) represented by the following general formula (1): R¹-O-C(=O)-O-Z-O-R² (1), and an ether compound (B) having two or more ether groups, wherein a proportion of the ether compound (B) in a total of the carbonate compound (A) and the ether compound (B) is 33.0 to 80.0 mol%. The invention can provide a solid catalyst component for olefin polymerization using an ether compound having two or more ether groups and a carbonate compound as internal electron donating compounds, wherein the solid catalyst component for olefin polymerization has, in the polymerization of olefins, a moderately wide molecular weight distribution of an olefin polymer obtained therefrom and can increase the polymerization activity.

## Description

### [Technical Field]

The present invention relates to a solid catalyst component for olefin polymerization containing an electron donating compound that can be a substitute for a phthalic ester and a method for producing the same; a method for producing a catalyst for olefin polymerization; and a method for producing an olefin polymer using the same.

### [Background Art]

Solid catalyst components containing, as essential components, magnesium, titanium, an electron donating compound such as phthalic ester and a halogen atom have been known as components of a catalyst for olefin polymerization; and many catalysts for olefin polymerization formed of the above solid catalyst component, and an organoaluminum compound and an organosilicon compound have been proposed. Conventionally, diester phthalate has been used as an internal electron donating compound of a solid catalyst component for olefin polymerization.

In recent years, from the viewpoint of reducing loads on the environment, catalysts that do not use Substance of Very High Concern (SVHC) of the REACH regulation (official name: Registration, Evaluation, Authorisation, Restriction and Chemical) in Europe have been widely used. Thus, various compounds having an electron donating group such as diether compounds or carbonate ether compounds are proposed as a substitute for diester phthalate.

Diether compounds provide a highly active catalyst with moderately high stereoregularity, but polymers obtained therefrom have a narrow molecular weight distribution. On the other hand, carbonate compounds have a high stereoregularity, but have inferior polymerization activity compared to diether compounds.

Patent Literature 1 discloses combined use of a dither compound and a carbonate compound as internal electron donating compounds, that is, a solid catalyst component, which contains magnesium, titanium, a halogen, a carbonate compound (A) represented by the following general formula (1) and an ether compound (B) having two or more ether groups.

R¹-O-C(=O)-O-Z-O-R² (1)

wherein R¹ and R² represent a hydrocarbon group or substituted hydrocarbon group having 1 to 24 carbon atoms, or a heteroatom-containing group, and R¹ and R² are the same as or different from each other; and Z represents a linking group that links through a carbon atom or a carbon chain.

### [Citation List]

### [Patent Literature]

[Patent Literature 1] WO 2015/107708

### [Summary of Invention]

### [Technical Problem]

However, combined use of a dither compound and a carbonate compound as internal electron donating compounds as disclosed in Patent Literature 1 provides olefin polymers that have a wider molecular weight distribution but disadvantageously reduce the catalytic activity compared to use of diether compounds alone as internal electron donating compounds.

Thus, an object of the present invention is to provide a solid catalyst component for olefin polymerization using, as internal electron donating compounds, an ether compound having two or more ether groups and a carbonate compound, wherein the solid catalyst component for olefin polymerization has, in the polymerization of olefins, a moderately wide molecular weight distribution of an olefin polymer obtained therefrom and can increase the polymerization activity; and a production method thereof.

### [Solution to Problem]

In order to solve the above technical problem, the present inventors have repeated intensive studies, and as a result, they have found that: when a solid catalyst component for olefin polymerization is prepared using an ether compound having two or more ether groups and a carbonate compound as internal electron donors, a ratio between the ether compound having two or more ether groups and the carbonate compound is within a predetermined range; when a contact product obtained by bringing a magnesium compound, a halogen-containing titanium compound, the carbonate compound and the ether compound having two or more ether groups is brought into recontact with a halogen-containing titanium compound, a volume ratio of the halogen-containing titanium compound to an inert organic solvent in a mixture for recontact of the halogen-containing titanium compound and the inert organic solvent is within a predetermined range; and a synergistic effect of the above allows a catalyst produced by use of the solid catalyst component to moderately widen a molecular weight distribution of an olefin polymer obtained thereby and enhance the polymerization activity, thereby completed the present invention.

That is, the present invention provides:
(1) a solid catalyst component for olefin polymerization, containing magnesium, titanium, a halogen, a carbonate compound (A) represented by the following general formula (1), and an ether compound (B) having two or more ether groups,

   R¹-O-C(=O)-O-Z-O-R² (1)

   wherein R¹ and R² represent a hydrocarbon group or substituted hydrocarbon group having 1 to 24 carbon atoms, or a heteroatom-containing group, and R¹ and R² are the same as or different from each other; and Z represents a linking group that links through a carbon atom or a carbon chain,
   wherein a proportion of the ether compound (B) in a total of the carbonate compound (A) and the ether compound (B) is 33.0 to 80.0 mol%;
(2) the solid catalyst component for olefin polymerization according to (1), wherein the ether compound (B) is a 1,3-diether;
(3) the solid catalyst component for olefin polymerization according to (1) or (2), wherein the ether compound (B) is 2-isopropyl-2-isopentyl-1,3-dimethoxypropane, 2-isopropyl-2-isobutyl-1,3-dimethoxypropane or 9,9-bis(methoxymethyl)fluorene;
(4) a method for producing a solid catalyst component for olefin polymerization, comprising:
   a first step of bringing a magnesium compound, a halogen-containing titanium compound, a carbonate compound (A) represented by the following general formula (1), and an ether compound (B) having two or more ether groups into contact with one another to obtain a contact product,

      R¹-O-C(=O)-O-Z-O-R² (1)
   wherein R¹ and R² represent a hydrocarbon group or substituted hydrocarbon group having 1 to 24 carbon atoms, or a heteroatom-containing group, and R¹ and R² are the same as or different from each other; and Z represents a linking group that links through a carbon atom or a carbon chain;
   an intermediate washing step of washing the contact product in contact with an inert organic solvent to obtain a washed matter of the contact product; and
   a second step of conducting a contact treatment of the washed matter of the contact product with a mixture solution of a halogen-containing titanium compound/an inert organic solvent at least once to obtain a solid catalyst component for olefin polymerization,
   wherein in the first step, a proportion of a contact amount of the ether compound (B) in a total of a contact amount of the carbonate compound (A) and the contact amount of the ether compound (B) is 25.0 to 80.0 mol%,
   wherein in the second step, the mixture solution of a halogen-containing titanium compound/an inert organic solvent is obtained by mixing the halogen-containing titanium compound with the inert organic solvent such that a volume ratio of the halogen-containing titanium compound relative to the inert organic solvent (halogen-containing titanium compound/inert organic solvent) is 0.25 or more;
(5) the method for producing a solid catalyst component for olefin polymerization according to (4), wherein the total of the contact amount of the carbonate compound (A) and the contact amount of the ether compound (B) is 0.08 to 0.30 mol per 1.00 mol of the magnesium compound;
(6) the method for producing a solid catalyst component for olefin polymerization according to (4) or (5), wherein in the second step, a number of contact treatments of the contact product with the mixture solution of a halogen-containing titanium compound/an inert organic solvent is 2 to 6;
(7) a method for producing a catalyst for olefin polymerization, comprising:
   bringing (I) the solid catalyst component for olefin polymerization according to any one of (1) to (3), the solid catalyst component for olefin polymerization obtained by the method for producing a solid catalyst component for olefin polymerization according to any one of (4) to (6), and (II) an organoaluminum compound represented by the following general formula (4) into contact with each other, thereby obtaining a catalyst for olefin polymerization,

      R¹¹ₚAlQ₃₋ₚ (4)

      wherein R¹¹ represents an alkyl group having 1 to 6 carbon atoms, Q represents a hydrogen atom or a halogen, p is a real number that satisfies 0<p≤3, and R¹¹'s are the same as or different from each other;
(8) a method for producing a catalyst for olefin polymerization, comprising:
   bringing (I) the solid catalyst component for olefin polymerization according to any one of (1) to (3) or the solid catalyst component for olefin polymerization obtained by the method for producing a solid catalyst component for olefin polymerization according to any one of (4) to (6), (II) an organoaluminum compound represented by the following general formula (4), and (III) an external electron donating compound into contact with one another, thereby obtaining a catalyst for olefin polymerization,

      R¹¹ₚAlQ₃₋ₚ (4)

      wherein R¹¹ represents an alkyl group having 1 to 6 carbon atoms, Q represents a hydrogen atom or a halogen, p is a real number that satisfies 0<p≤3, and R¹¹'s are the same as or different from each other; and
(9) a method for producing an olefin polymer, comprising conducting polymerization of olefins using a catalyst for olefin polymerization obtained by the method for producing a catalyst for olefin polymerization according to (7) or (8).

### [Advantageous Effects of Invention]

The present invention provides: a solid catalyst component, which uses an ether compound having two or more ether groups and a carbonate compound as internal electron donating compounds, wherein the solid catalyst component for olefin polymerization has, in the polymerization of olefins, a moderately wide molecular weight distribution of an olefin polymer obtained therefrom and can increase the polymerization activity; and a production method thereof.

### [Description of Embodiments]

### (Solid Catalyst Component)

A solid catalyst component for olefin polymerization according to the present invention contains magnesium, titanium, a halogen, a carbonate compound (A) represented by the following general formula (1), and an ether compound (B) having two or more ether groups,

R¹-O-C(=O)-O-Z-O-R² (1)

wherein R¹ and R² represent a hydrocarbon group or substituted hydrocarbon group having 1 to 24 carbon atoms, or a heteroatom-containing group, and R¹ and R² are the same as or different from each other; and Z represents a linking group that links through a carbon atom or a carbon chain,
wherein a proportion of the ether compound (B) in a total of the carbonate compound (A) and the ether compound (B) is 33.0 to 80.0 mol%.

A solid catalyst component for olefin polymerization (hereinafter may be referred to as "solid catalyst component (I)") of the present invention contains magnesium, titanium, a halogen, the carbonate compound (A) represented by the general formula (1) (hereinafter may be referred to as "component (A)"), and the ether compound (B) having two or more ether groups (hereinafter may be referred to as "component (B)") as essential components.

Examples of the halogen include a fluorine atom, a chlorine atom, a bromine atom, and an iodine atom; among these, a chlorine atom, a bromine atom, and an iodine atom are preferable; and a chlorine atom and an iodine atom are particularly preferable.

Examples of the hydrocarbon group or substituted hydrocarbon group having 1 to 24 carbon atoms, represented by R¹ and R² in the general formula (1), include linear alkyl groups, branched alkyl groups having 3 to 20 carbon atoms, a vinyl group, linear or branched alkenyl groups having 3 to 20 carbon atoms, linear halogen-substituted alkyl groups, branched halogen-substituted alkyl groups having 3 to 20 carbon atoms, linear halogen-substituted alkenyl groups having 2 to 20 carbon atoms, branched halogen-substituted alkenyl groups having 3 to 20 carbon atoms, cycloalkyl groups having 3 to 20 carbon atoms, cycloalkenyl groups, halogen-substituted cycloalkyl groups having 3 to 20 carbon atoms, halogen-substituted cycloalkenyl groups having 3 to 20 carbon atoms, aromatic hydrocarbon groups having 6 to 24 carbon atoms, and halogen-substituted aromatic hydrocarbon groups having 3 to 24 carbon atoms.

Further, examples of the heteroatom-containing group represented by R¹ and R² include nitrogen atom-containing hydrocarbon groups with a carbon atom at a binding end, oxygen atom-containing hydrocarbon groups with a carbon atom at a binding end, phosphorus-containing hydrocarbon groups with a carbon atom at a binding end, and silicon-containing hydrocarbon groups.

Examples of the linear alkyl groups having 1 to 24 carbon atoms represented by R¹ and R² include a methyl group, an ethyl group, an n-propyl group, an n-butyl group, an n-pentyl group, an n-hexyl group, an n-pentyl group, an n-octyl group, an n-nonyl group, and an n-decyl group. Preferred are linear alkyl groups having 1 to 12 carbon atoms.

Further, examples of the branched alkyl groups having 3 to 20 carbon atoms represented by R¹ and R² include a secondary carbon atom or a tertiary carbon atom such as isopropyl group, isobutyl group, t-butyl group, isopentyl group, and neopentyl group. Preferred are branched alkyl groups having 3 to 12 carbon atoms.

Further, examples of the linear alkenyl groups having 3 to 20 carbon atoms represented by R¹ and R² include an allyl group, a 3-butenyl group, a 4-hexenyl group, a 5-hexenyl group, a 7-octenyl group, and a 10-dodecenyl group. Preferred are linear alkenyl groups having 3 to 12 carbon atoms. Examples of the branched alkenyl groups having 3 to 20 carbon atoms include an isopropenyl group, an isobutenyl group, an isopentenyl group, and a 2-ethyl-3-hexenyl group. Preferred are branched alkenyl groups having 3 to 12 carbon atoms.

Further, examples of the linear halogen-substituted alkyl groups having 1 to 20 carbon atoms represented by R¹ and R² include a halogenated methyl group, a halogenated ethyl group, a halogenated n-propyl group, a halogenated n-butyl group, a halogenated n-pentyl group, a halogenated n-hexyl group, a halogenated n-pentyl group, a halogenated n-octyl group, a halogenated nonyl group, a halogenated decyl group, a halogen-substituted undecyl group, and a halogen-substituted dodecyl group. Preferred are linear halogen-substituted alkyl groups having 1 to 12 carbon atoms. Further, examples of the branched halogen-substituted alkyl groups having 3 to 20 carbon atoms include a halogenated isopropyl group, a halogenated isobutyl group, a halogenated 2-ethylhexyl group, and a halogenated neopentyl group. Preferred are branched halogen-substituted alkyl groups having 3 to 12 carbon atoms.

Further, examples of the linear halogen-substituted alkenyl groups having 2 to 20 carbon atoms represented by R¹ and R² include a 2-halogenated vinyl group, a 3-halogenated allyl group, a 3-halogenated 2-butenyl group, a 4-halogenated 3-butenyl group, a perhalogenated 2-butenyl group, a 6-halogenated 4-hexenyl group, and a 3-trihalogenated methyl-2-propenyl group. Preferred are halogen-substituted alkenyl groups having 2 to 12 carbon atoms. Further, examples of the branched halogen-substituted alkenyl groups having 3 to 20 carbon atoms include a 3-trihalogenated 2-butenyl group, a 2-pentahalogenated ethyl-3-hexenyl group, a 6-halogenated 3-ethyl-4-hexenyl group, and a 3-halogenated isobutenyl group. Preferred are branched halogen-substituted alkenyl groups having 3 to 12 carbon atoms.

Further, examples of the cycloalkyl groups having 3 to 20 carbon atoms represented by R¹ and R² include a cyclopropyl group, a cyclobutyl group, a cyclopentyl group, a tetramethylcyclopentyl group, a cyclohexyl group, a methylcyclohexyl group, a cycloheptyl group, a cyclooctyl group, a cyclononyl group, a cyclodecyl group, and a butylcyclopentyl group. Preferred are cycloalkyl groups having 3 to 12 carbon atoms. Further, examples of the cycloalkenyl groups having 3 to 20 carbon atoms include a cyclopropenyl group, a cyclopentenyl group, a cyclohexenyl group, a cyclooctenyl group, and a norbornene group. Preferred are cycloalkenyl groups having 3 to 12 carbon atoms.

Further, examples of the halogen-substituted cycloalkyl groups having 3 to 20 carbon atoms represented by R¹ and R² include a halogen-substituted cyclopropyl group, a halogen-substituted cyclobutyl group, a halogen-substituted cyclopentyl group, a halogen-substituted trimethylcyclopentyl group, a halogen-substituted cyclohexyl group, a halogen-substituted methylcyclohexyl group, a halogen-substituted cycloheptyl group, a halogen-substituted cyclooctyl group, a halogen-substituted cyclononyl group, a halogen-substituted cyclodecyl group, and a halogen-substituted butylcyclopentyl group. Preferred are halogen-substituted cycloalkyl groups having 3 to 12 carbon atoms.

Further, examples of the halogen-substituted cycloalkenyl groups having 3 to 20 carbon atoms represented by R¹ and R² include a halogen-substituted cyclopropenyl group, a halogen-substituted cyclobutenyl group, a halogen-substituted cyclopentenyl group, a halogen-substituted trimethylcyclopentenyl group, a halogen-substituted cyclohexenyl group, a halogen-substituted methylcyclohexenyl group, a halogen-substituted cycloheptenyl group, a halogen-substituted cyclooctenyl group, a halogen-substituted cyclononenyl group, a halogen-substituted cyclodecenyl group, and a halogen-substituted butylcyclopentenyl group. Preferred are halogen-substituted cycloalkenyl groups having 3 to 12 carbon atoms.

Further, examples of the aromatic hydrocarbon groups having 6 to 24 carbon atoms represented by R¹ and R² include a phenyl group, a methylphenyl group, a dimethylphenyl group, an ethylphenyl group, a benzyl group, a 1-phenylethyl group, a 2-phenylethyl group, a 2-phenylpropyl group, a 1-phenylbutyl group, a 4-phenylbutyl group, a 2-phenylheptyl group, a tolyl group, a xylyl group, a naphthyl group, and a 1,8-dimethylnaphthyl group. Preferred are aromatic hydrocarbon groups having 6 to 12 carbon atoms.

Further, examples of the halogen-substituted aromatic hydrocarbon groups having 6 to 24 carbon atoms represented by R¹ and R² include a halogenated phenyl group, a halogenated methylphenyl group, a trihalogenated methylphenyl group, a perhalogenated benzyl group, a perhalogenated phenyl group, a 2-phenyl-2-halogenated ethyl group, a perhalogenated naphthyl group, and a 4-phenyl-2,3-dihalogenated butyl group. Preferred are halogen-substituted aromatic hydrocarbon groups having 6 to 12 carbon atoms.

Note that in the halogen-substituted alkyl groups, the halogen-substituted alkenyl groups, the halogen-substituted cycloalkyl groups, the halogen-substituted cycloalkenyl groups, and the halogen-substituted aromatic hydrocarbon groups, all of which are represented by R¹ and R², examples of halogen species include fluorine, chlorine, bromine and iodine; and preferred are fluorine, chlorine and bromine.

Further, examples of the nitrogen atom-containing hydrocarbon groups with a carbon atom at a binding end, which are represented by R¹ and R², include nitrogen atom-containing hydrocarbon groups excluding a nitrogen atom-containing hydrocarbon group with a C=N group at a binding end; and examples thereof include alkylaminoalkyl groups such as a methylaminomethyl group, a dimethylaminomethyl group, an ethylaminomethyl group, a diethylaminomethyl group, a propylaminomethyl group, a dipropylaminomethyl group, a methylaminoethyl group, a dimethylaminoethyl group, an ethylaminoethyl group, a diethylaminoethyl group, a propylaminoethyl group, a dipropylaminoethyl group, a butylaminoethyl group, a dibutylaminoethyl group, a pentylaminoethyl group, a dipentylaminoethyl group, a hexylaminoethyl group, a hexylmethylaminoethyl group, a heptylmethylaminoethyl group, a diheptylaminomethyl group, an octylmethylaminomethyl group, a dioctylaminoethyl group, a nonylaminomethyl group, a dinonylaminomethyl group, a decylaminomethyl group, a didecylamino group, a cyclohexylaminomethyl group, and a dicyclohexylaminomethyl group; arylaminoalkyl groups or alkylarylaminoalkyl groups such as a phenylaminomethyl group, a diphenylaminomethyl group, a ditolylaminomethyl group, a dinaphthylaminomethyl group, and a methylphenylaminoethyl group, polycyclic aminoalkyl groups, amino group-containing aromatic hydrocarbon groups such as an anilino group, a dimethylaminophenyl group, and a bisdimethylaminophenyl group; and iminoalkyl groups such as a methyliminomethyl group, an ethyliminoethyl group, a propylimino group, and a butylimino group and a phenylimino group. Preferred are nitrogen atom-containing hydrocarbon groups having 2 to 12 carbon atoms. Note that the binding end used herein refers to an atom or a group at the side of oxygen atom, to which R¹ and R² bind.

Further, examples of the oxygen atom-containing hydrocarbon groups with a carbon atom at a binding end, which are represented by R¹ and R², include oxygen atom-containing hydrocarbon groups having 2 to 24 carbon atoms excluding oxygen atom-containing hydrocarbon groups with a carbonyl group at a binding end. Examples thereof include: ether group-containing hydrocarbon groups such as a methoxymethyl group, an ethoxymethyl group, a propoxymethyl group, a butoxymethyl group, an isopropoxymethyl group, an isobutoxymethyl group, a methoxyethyl group, an ethoxyethyl group, a propoxyethyl group, a butoxyethyl group, an isopropoxyethyl group, and an isobutoxyethyl group; aryloxyalkyl groups such as a phenoxymethyl group, a methylphenoxymethyl group, a dimethylphenoxymethyl group, and a naphthoxymethyl group; alkoxyaryl groups such as a methoxyphenyl group and an ethoxyphenyl group; and acetoxymethyl group. Preferred are oxygen atom-containing hydrocarbon groups having 2 to 12 carbon atoms. Note that the binding end used herein refers to an atom or a group at the side of oxygen atom, to which R¹ and R² bind.

Further, examples of the phosphorus-containing hydrocarbon groups with a carbon atom at a binding end, which are represented by R¹ and R², include phosphorus-containing hydrocarbon groups excluding phosphorus-containing hydrocarbon groups with a C=P group at a binding end. Examples thereof include:
dialkylphosphinoalkyl groups such as a
dimethylphosphinomethyl group, a dibutylphosphinomethyl group, a dicyclohexylphosphinomethyl group, a dimethylphosphinoethyl group, a dibutylphosphinoethyl group, and a dicyclohexylphosphinoethyl group;
diarylphosphinoalkyl groups such as a
diphenylphosphinomethyl group and a
ditolylphosphinomethyl group; and phosphino group-substituted aryl groups such as a dimethylphosphinophenyl group and a diethylphosphinophenyl group. Preferred are phosphorus-containing hydrocarbon groups having 2 to 12 carbon atoms. Note that the binding end used herein refers to an atom or a group at the side of oxygen atom, to which R¹ and R² bind.

Further, examples of the silicon-containing hydrocarbon groups with a carbon atom at a binding end, which are represented by R¹ and R², include silicon-containing hydrocarbon groups having 1 to 24 carbon atoms. Examples thereof include: a hydrocarbon-substituted silyl group, a hydrocarbon-substituted siloxyalkyl group, a hydrocarbon-substituted silylalkyl group, and a hydrocarbon-substituted silylaryl group; and specific examples thereof include: hydrocarbon-substituted silyl groups such as phenylsilyl, diphenylsilyl, trimethylsilyl, triethylsilyl, tripropylsilyl, tricyclohexylsilyl, triphenylsilyl, methyldiphenylsilyl, tritolylsilyl, and trinaphthylsilyl; siloxy hydrocarbon groups such as a trimethylsiloxymethyl group, a trimethylsiloxyethyl group, and a trimethylsiloxyphenyl group; hydrocarbon-substituted silyl ether groups such as trimethyl silyl ether; silicon-substituted alkyl groups such as trimethylsilylmethyl; and silicon-substituted aryl groups such as trimethylsilylphenyl. Preferred are silicon-containing hydrocarbon groups having 1 to 12 carbon atoms.

Among the above R¹'s, a preferred group is a linear alkyl group having 1 to 12 carbon atoms, a branched alkyl group having 3 to 12 carbon atoms, a vinyl group, a linear or branched alkenyl group having 3 to 12 carbon atoms, a linear halogen-substituted alkyl group having 1 to 12 carbon atoms, a branched halogen-substituted alkyl group having 3 to 12 carbon atoms, a linear or branched halogen-substituted alkenyl group having 3 to 12 carbon atoms, a cycloalkyl group having 3 to 12 carbon atoms, a cycloalkenyl group having 3 to 12 carbon atoms, a halogen-substituted cycloalkyl group having 3 to 12 carbon atoms, a halogen-substituted cycloalkenyl group having 3 to 12 carbon atoms, or an aromatic hydrocarbon group having 6 to 12 carbon atoms. A more preferred group is a linear alkyl group having 1 to 12 carbon atoms, a branched alkyl group having 3 to 12 carbon atoms, a vinyl group, a linear or branched alkenyl group having 3 to 12 carbon atoms, a linear halogen-substituted alkyl group having 1 to 12 carbon atoms, a branched halogen-substituted alkyl group having 3 to 12 carbon atoms, a cycloalkyl group having 3 to 12 carbon atoms, a cycloalkenyl group having 3 to 12 carbon atoms, or an aromatic hydrocarbon group having 6 to 12 carbon atoms.

A particularly preferred group is a linear alkyl group having 1 to 12 carbon atoms, a branched alkyl group having 3 to 12 carbon atoms, and an aromatic hydrocarbon group having 6 to 12 carbon atoms.

R² is preferably a linear alkyl group having 1 to 12 carbon atoms, a branched alkyl group having 3 to 12 carbon atoms with -CH₂- at a binding end, a vinyl group, a linear alkenyl group having 3 to 12 carbon atoms, a branched alkenyl group having 3 to 12 carbon atoms with - CH₂- at a binding end, a linear halogen-substituted alkyl group having 1 to 12 carbon atoms, a branched halogen-substituted alkyl group having 3 to 12 carbon atoms with -CH₂- at a binding end, a linear halogen-substituted alkenyl group having 3 to 12 carbon atoms, a branched halogen-substituted alkenyl group having 3 to 12 carbon atoms with -CH₂- at a binding end, a cycloalkyl group having 4 to 12 carbon atoms with -CH₂- at a binding end, a cycloalkenyl group having 4 to 12 carbon atoms with - CH₂- at a binding end, a halogen-substituted cycloalkyl group having 4 to 12 carbon atoms with -CH₂- at a binding end, a halogen-substituted cycloalkenyl group having 4 to 12 carbon atoms with -CH₂- at a binding end, or an aromatic hydrocarbon group having 7 to 12 carbon atoms with -CH₂- at a binding end; further preferably a linear alkyl group having 1 to 12 carbon atoms, a branched alkyl group having 3 to 12 carbon atoms with -CH₂- at a binding end, a branched alkenyl group having 3 to 12 carbon atoms with -CH₂- at a binding end, a linear halogen-substituted alkyl group having 1 to 12 carbon atoms with -CH₂- at a binding end, a branched halogen-substituted alkyl group having 3 to 12 carbon atoms with -CH₂- at a binding end, a branched halogen-substituted alkenyl group having 3 to 12 carbon atoms with -CH₂- at a binding end, a cycloalkyl group having 4 to 12 carbon atoms with -CH₂- at a binding end, a cycloalkenyl group having 4 to 12 carbon atoms with -CH₂- at a binding end, a halogen-substituted cycloalkyl group having 4 to 12 carbon atoms with -CH₂-at a binding end, a halogen-substituted cycloalkenyl group having 4 to 12 carbon atoms with -CH₂- at a binding end, or an aromatic hydrocarbon group having 7 to 12 carbon atoms with -CH₂- at a binding end; and particularly preferably group is a linear hydrocarbon group having 1 to 12 carbon atoms, a branched alkyl group having 3 to 12 carbon atoms with -CH₂- at a binding end, and an aromatic hydrocarbon group having 7 to 12 carbon atoms with -CH₂- at a binding end. Note that the binding end used in R² refers to a group at the side of oxygen atom, to which R² bind.

Examples of the linking group Z that links two oxygen atoms through a carbon chain, the carbon chain being formed of two carbon atoms include groups represented by the following general formula (2):

-CR³R⁴CR⁵R⁶- (2)

wherein R³ to R⁶ represent a hydrogen atom, a halogen atom, an alkyl group having 1 to 12 carbon atoms, a vinyl group, an alkenyl group having 3 to 12 carbon atoms, a cycloalkyl group or cycloalkenyl group having 3 to 12 carbon atoms, an aromatic hydrocarbon group having 6 to 12 carbon atoms or a substituted aromatic hydrocarbon group having 7 to 12 carbon atoms; they are the same as or different from each other and may be bonded to each other to form a ring, and R³ to R⁶ are preferably a hydrogen atom or an alkyl group having 1 to 12 carbon atoms.

A preferred group for Z is a linear alkylene group having 1 to 20 carbon atoms, a branched alkylene group having 3 to 20 carbon atoms, a vinylene group, a linear or branched alkenylene group having 3 to 20 carbon atoms, a linear halogen-substituted alkylene group having 1 to 20 carbon atoms, a branched halogen-substituted alkylene group having 3 to 20 carbon atoms, a linear or branched halogen-substituted alkenylene group having 3 to 20 carbon atoms, a cycloalkylene group having 3 to 20 carbon atoms, a cycloalkenylene group having 3 to 20 carbon atoms, a halogen-substituted cycloalkylene group having 3 to 20 carbon atoms, a halogen-substituted cycloalkenylene group having 3 to 20 carbon atoms, an aromatic hydrocarbon group having 6 to 24 carbon atoms, a halogen-substituted aromatic hydrocarbon group having 6 to 24 carbon atoms, a nitrogen atom-containing hydrocarbon group having 1 to 24 carbon atoms, an oxygen atom-containing hydrocarbon group having 1 to 24 carbon atoms, a phosphorus-containing hydrocarbon group having 1 to 24 carbon atoms, or a silicon-containing hydrocarbon group having 1 to 24 carbon atoms.

Further, a more preferred group for Z is an ethylene group having 2 carbon atoms, a branched alkylene group having 3 to 12 carbon atoms, a vinylene group, a linear or branched alkenylene group having 3 to 12 carbon atoms, a linear halogen-substituted alkylene group having 2 to 12 carbon atoms, a branched halogen-substituted alkylene group having 3 to 12 carbon atoms, a linear or branched halogen-substituted alkenylene group having 3 to 12 carbon atoms, a cycloalkylene group having 3 to 12 carbon atoms, a cycloalkenylene group having 3 to 12 carbon atoms, a halogen-substituted cycloalkylene group having 3 to 12 carbon atoms, a halogen-substituted cycloalkenylene group having 3 to 12 carbon atoms, an aromatic hydrocarbon group having 6 to 12 carbon atoms, a halogen-substituted aromatic hydrocarbon group having 6 to 12 carbon atoms, a nitrogen atom-containing hydrocarbon group having 2 to 12 carbon atoms, an oxygen atom-containing hydrocarbon group having 2 to 12 carbon atoms, a phosphorus-containing hydrocarbon group having 2 to 12 carbon atoms, or a silicon-containing hydrocarbon group having 2 to 12 carbon atoms. A particularly preferred group is a bidentate binding group selected from an ethylene group having 2 carbon atoms and a branched alkylene group having 3 to 12 carbon atoms. Note that a bidentate binding group is a group wherein two oxygen atoms, to which Z binds, are bound through a carbon chain and the carbon chain is formed of two carbon atoms.

Examples of the linear alkylene group having 1 to 20 carbon atoms, represented by Z, include an ethylene group, a trimethylene group, a tetramethylene group, a pentamethylene group, a hexamethylene group, a heptamethylene group, an octamethylene group, a nonamethylene group, a decamethylene group, an undecamethylene group, a dodecamethylene group, a tridecamethylene group and a tetradecamethylene group. Preferred are linear alkylene groups having 2 to 12 carbon atoms. More preferred is an ethylene group.

Examples of the branched alkylene group having 3 to 20 carbon atoms, represented by Z, include a 1-methylethylene group, a 2-methyltrimethylene group, a 2-methyltetramethylene group, a 2-methylpentamethylene group, a 3-methylhexamethylene group, a 4-methylheptamethylene group, a 4-methyloctamethylene group, a 5-methylnonamethylene group, a 5-methyldecamethylene group, a 6-methylundecamethylene group, a 7-methyldodecamethylene group, and a 7-methyltridecamethylene group. Preferred are branched alkylene groups having 3 to 12 carbon atoms. More preferred are a 1-methylethylene group, a 2-methylethylene group, and a 1-ethylethylene group.

Examples of the linear alkenylene group having 3 to 20 carbon atoms, represented by Z, include a propenylene group, a butenylene group, a hexenylene group, an octenylene group and an octadecenylene group. Preferred are linear alkenylene groups having 3 to 12 carbon atoms.

Examples of the branched alkenylene group having 3 to 20 carbon atoms, represented by Z, include an isopropenylene group, a 1-ethylethenylene group, a 2-methylpropenylene group, a 2,2-dimethylbutenylene group, a 3-methyl-2-butenylene group, a 3-ethyl-2-butenylene group, a 2-methyloctenylene group and a 2,4-dimethyl-2-butenylene group. Preferred are branched alkenylene groups having 3 to 12 carbon atoms and having an ethenylene group as a connecting moiety. More preferred are an isopropenylene group and a 1-ethylethenylene group.

Examples of the linear halogen-substituted alkenylene group having 1 to 20 carbon atoms, represented by Z, include a dichloroethenylene group, a difluoroethenylene group, a 3,3-dichloropropenylene group, and a 1,2-difluoropropenylene group. Preferred are linear halogen-substituted alkenylene groups having 3 to 12 carbon atoms.

Examples of the branched halogen-substituted alkylene group having 1 to 20 carbon atoms, represented by Z, include a 3,4-dichloro-1,2-butylene group, a 2,2-dichloro-1,3-butylene group and a 1,2-difluoro-1,2-propylene group. Preferred are branched halogen-substituted alkylene groups having 3 to 12 carbon atoms.

Examples of the cycloalkylene group having 3 to 20 carbon atoms, represented by Z, include a cyclopentylene group, a cyclohexylene group, a cyclopropylene group, a 2-methylcyclopropylene group, a cyclobutylene group, a 2,2-dimethylcyclobutylene group, a 2,3-dimethylcyclopentylene group, a 1,3,3-trimethylcyclohexylene group and a cyclooctylene group. Preferred are cycloalkylene groups having 3 to 12 carbon atoms.

Examples of the cycloalkenylene group having 3 to 20 carbon atoms, represented by Z, include a cyclopentenylene group, a 2,4-cyclopentadienylene group, a cyclohexenylene group, a 1,4-cyclohexadienylene group, a cycloheptenylene group, a methylcyclopentenylene group, a methylcyclohexenylene group, a methylcycloheptenylene group, a dicyclodecylene group and a tricyclodecylene group. Preferred are cycloalkenylene groups having 3 to 12 carbon atoms.

Examples of the halogen-substituted cycloalkylene group having 3 to 20 carbon atoms, represented by Z, include a 3-chloro-1,2-cyclopentylene group, a 3,4,5,6-tetrachloro-1,2-cyclohexylene group, a 3,3-dichloro-1,2-cyclopropylene group, a 2-chloromethylcyclopropylene group, a 3,4-dichloro-1,2-cyclobutylene group, a 3,3-bis(dichloromethyl)-1,2-cyclobutylene group, a 2,3-bis(dichloromethyl)cyclopentylene group, a 1,3,3-tris(fluoromethyl)-1,2-cyclohexylene group and a 3-trichloromethyl-1,2-cyclooctylene group. Preferred are halogen-substituted cycloalkylene groups having 3 to 12 carbon atoms.

Examples of the halogen-substituted cycloalkenylene group having 3 to 20 carbon atoms, represented by Z, include a 5-chloro-1,2-cyclo-4-hexenylene group and a 3,3,4,4-tetrafluoro-1,2-cyclo-6-octenylene group. Preferred are halogen-substituted cycloalkenylene groups having 3 to 12 carbon atoms.

Examples of the aromatic hydrocarbon group having 6 to 24 carbon atoms, represented by Z, include 1,2-phenylene, 3-methyl-1,2-phenylene, 3,6-dimethyl-1,2-phenylene, 1,2-naphthylene 2,3-naphthylene, 5-methyl-1,2-naphthylene, 9,10-phenanthrylene and 1,2-anthracenylene. Preferred are aromatic hydrocarbon groups having 6 to 12 carbon atoms.

Examples of the halogen-substituted aromatic hydrocarbon group having 6 to 24 carbon atoms, represented by Z, include 3-chloro-1,2-phenylene, 3-chloromethyl-1,2-phenylene, 3,6-dichloro-1,2-phenylene, 3,6-dichloro-4,5-dimethyl-1,2-phenylene, 3-chloro-1,2-naphthylene, 3-fluoro-1,2-naphthylene, 3,6-dichloro-1,2-phenylene, 3,6-difluoro-1,2-phenylene, 3,6-dibromo-1,2-phenylene, 1-chloro-2,3-naphthylene, 5-chloro-1,2-naphthylene, 2,6-dichloro-9,10-phenanthrylene, 5,6-dichloro-1,2-anthracenylene and 5,6-difluoro-1,2-anthracenylene. Preferred are halogen-substituted aromatic hydrocarbon groups having 6 to 12 carbon atoms.

Examples of the nitrogen atom-containing hydrocarbon group having 1 to 24 carbon atoms, represented by Z, include a 1-dimethylaminoethylene group, a 1,2-bisdimethylaminoethylene group, a 1-diethylaminoethylene group, a 2-diethylamino-1,3-propylene group, a 2-ethylamino-1,3-propylene group, a 4-dimethylamino-1,2-phenylene group and a 4,5-bis(dimethylamino)phenylene group. Preferred are nitrogen atom-containing hydrocarbon groups having 2 to 12 carbon atoms.

Examples of the oxygen atom-containing hydrocarbon group having 1 to 24 carbon atoms, represented by Z, include a 1-methoxyethylene group, a 2,2-dimethoxy-1,3-propanylene group, a 2-ethoxy-1,3-propanylene group, a 2-t-butoxy-1,3-propanylene group, a 2,3-dimethoxy-2,3-butylene group and a 4-methoxy-1,2-phenylene group. Preferred are oxygen atom-containing hydrocarbon groups having 2 to 12 carbon atoms.

Examples of the phosphorus-containing hydrocarbon group having 1 to 24 carbon atoms, represented by Z, include a 1-dimethylphosphinoethylene group, a 2,2-bis(dimethylphosphino)-1,3-propanylene group, a 2-diethylphosphino-1,3-propanylene group, a 2-t-butoxymethylphosphino-1,3-propanylene group, a 2,3-bis(diphenylphospino)-2,3-butylene group and a 4-methylphosphate-1,2-phenylene group. Preferred are phosphorus-containing hydrocarbon groups having 1 to 12 carbon atoms.

Examples of the silicon-containing hydrocarbon group having 1 to 24 carbon atoms, represented by Z, include a trimethylsilylethylene group, a 1,2-bis(trimethylsilyl)ethylene group, a 1,2-bis(trimethylsiloxy)ethylene group, a 2,2-bis(4-trimethylsilylphenyl)-1,3-propanylene group and a 1,2-bis(monomethylsilane)ethylene group. Preferred are silicon-containing hydrocarbon groups having 1 to 12 carbon atoms.

Examples of the compound represented by the general formula (I) may be one, or two or more selected from: (2-methoxyethyl) methyl carbonate, (2-ethoxyethyl) methyl carbonate, (2-propoxyethyl) methyl carbonate, (2-butoxyethyl) methyl carbonate, (2-(2-ethoxyethyloxy)ethyl) methyl carbonate, (2-benzyloxyethyl) methyl carbonate, (2-methoxypropyl) methyl carbonate, (2-ethoxypropyl) methyl carbonate, (2-methyl-2-methoxybutyl) methyl carbonate, (2-methyl-2-ethoxybutyl) methyl carbonate, (2-methyl-2-methoxypentyl) methyl carbonate, (2-methyl-2-ethoxypentyl) methyl carbonate, (1-phenyl-2-methoxypropyl) methyl carbonate, (1-phenyl-2-ethoxypropyl) methyl carbonate, (1-phenyl-2-benzyloxypropyl) methyl carbonate, (1-phenyl-2-methoxyethyl) methyl carbonate, (1-phenyl-2-ethoxyethyl) methyl carbonate, (1-methyl-1-phenyl-2-methoxyethyl) methyl carbonate, (1-methyl-1-phenyl-2-ethoxyethyl) methyl carbonate, (1-methyl-1-phenyl-2-benzyloxyethyl) methyl carbonate, (1-methyl-1-phenyl-2-(2-ethoxyethyloxy)ethyl) methyl carbonate, (2-methoxyethyl) ethyl carbonate, (2-ethoxyethyl) ethyl carbonate,

(1-phenyl-2-methoxyethyl) ethyl carbonate, (1-phenyl-2-ethoxyethyl) ethyl carbonate, (1-phenyl-2-propoxyethyl) ethyl carbonate, (1-phenyl-2-butoxyethyl) ethyl carbonate, (1-phenyl-2-isobutyloxyethyl) ethyl carbonate, (1-phenyl-2-(2-ethoxyethyloxy)ethyl) ethyl carbonate, (1-methyl-1-phenyl-2-methoxyethyl) ethyl carbonate, (1-methyl-1-phenyl-2-ethoxyethyl) ethyl carbonate, (1-methyl-1-phenyl-2-propoxyethyl) ethyl carbonate, (1-methyl-1-phenyl-2-butoxyethyl) ethyl carbonate, (1-methyl-1-phenyl-2-isobutyloxyethyl) ethyl carbonate, (1-methyl-1-phenyl-2-benzyloxyethyl) ethyl carbonate, (1-methyl-1-phenyl-2-(2-ethoxyethyloxy)ethyl) ethyl carbonate, (2-methoxyethyl) phenyl carbonate, (2-ethoxyethyl) phenyl carbonate, (2-propoxyethyl) phenyl carbonate, (2-butoxyethyl) phenyl carbonate, (2-isobutyloxyethyl) phenyl carbonate, (2-benzyloxyethyl) phenyl carbonate, (2-(2-ethoxyethyloxy) ethyl) phenyl carbonate, (2-methoxyethyl) p-methylphenyl carbonate, (2-ethoxyethyl) p-methylphenyl carbonate, (2-propoxyethyl) p-methylphenyl carbonate, (2-butoxyethyl) p-methylphenyl carbonate, (2-isobutyloxyethyl) p-methylphenyl carbonate, (2-benzyloxyethyl) p-methylphenyl carbonate, (2-(2-ethoxyethyloxy)ethyl) p-methylphenyl carbonate, (2-methoxyethyl) o-methylphenyl carbonate, (2-ethoxyethyl) o-methylphenyl carbonate, (2-propoxyethyl) o-methylphenyl carbonate, (2-butoxyethyl) o-methylphenyl carbonate, (2-isobutyloxyethyl) o-methylphenyl carbonate, (2-benzyloxyethyl) o-methylphenyl carbonate, (2-(2-ethoxyethyloxy)ethyl) o-methylphenyl carbonate,

(2-methoxyethyl) o,p-dimethylphenyl carbonate, (2-ethoxyethyl) o,p-dimethylphenyl carbonate, (2-propoxyethyl) o,p-dimethylphenyl carbonate, (2-butoxyethyl) o,p-dimethylphenyl carbonate, (2-isobutyloxyethyl) o,p-dimethylphenyl carbonate, (2-benzyloxyethyl) o,p-dimethylphenyl carbonate, (2-(2-ethoxyethyloxy)ethyl) o,p-dimethylphenyl carbonate, (2-methoxypropyl) phenyl carbonate, (2-ethoxypropyl) phenyl carbonate, (2-propoxypropyl) phenyl carbonate, (2-butoxypropyl) phenyl carbonate, (2-isobutyloxypropyl) phenyl carbonate, (2-(2-ethoxyethyloxy)propyl) phenyl carbonate,

(2-phenyl-2-methoxyethyl) phenyl carbonate, (2-phenyl-2-ethoxyethyl) phenyl carbonate, (2-phenyl-2-propoxyethyl) phenyl carbonate, (2-phenyl-2-butoxyethyl) phenyl carbonate, (2-phenyl-2-isobutyloxyethyl) phenyl carbonate, (2-phenyl-2-(2-ethoxyethyloxy)ethyl) phenyl carbonate,

(1-phenyl-2-methoxypropyl) phenyl carbonate, (1-phenyl-2-ethoxypropyl) phenyl carbonate, (1-phenyl-2-propoxypropyl) phenyl carbonate, (1-phenyl-2-isobutyloxypropyl) phenyl carbonate, (1-phenyl-2-methoxyethyl) phenyl carbonate, (1-phenyl-2-ethoxyethyl) phenyl carbonate, (1-phenyl-2-propoxyethyl) phenyl carbonate, (1-phenyl-2-butoxyethyl) phenyl carbonate, (1-phenyl-2-isobutyloxyethyl) phenyl carbonate, (1-phenyl-2-(2-ethoxyethyloxy)ethyl) phenyl carbonate,

(1-methyl-1-phenyl-2-methoxyethyl) phenyl carbonate, (1-methyl-1-phenyl-2-ethoxyethyl) phenyl carbonate, (1-methyl-1-phenyl-2-propoxyethyl) phenyl carbonate, (1-methyl-1-phenyl-2-butoxyethyl) phenyl carbonate, (1-methyl-1-phenyl-2-isobutyloxyethyl) phenyl carbonate, (1-methyl-1-phenyl-2-benzyloxyethyl) phenyl carbonate, and (1-methyl-1-phenyl-2-(2-ethoxyethyloxy)ethyl) phenyl carbonate; and particularly preferred are (2-ethoxyethyl) methyl carbonate, (2-ethoxyethyl) ethyl carbonate, (2-propoxyethyl) propyl carbonate, (2-butoxyethyl) butyl carbonate, (2-butoxyethyl) ethyl carbonate, (2-ethoxyethyl) propyl carbonate, (2-ethoxyethyl) phenyl carbonate and (2-ethoxyethyl) p-methylphenyl carbonate. Among the above compounds, particularly preferred are (2-ethoxyethyl) methyl carbonate, (2-ethoxyethyl) ethyl carbonate, (2-propoxyethyl) ethyl carbonate, (2-butoxyethyl) ethyl carbonate, (2-ethoxyethyl) phenyl carbonate and (2-ethoxyethyl) p-methylphenyl carbonate. The compounds represented by the general formula (1) may also be used either alone or in combination of two or more.

In the present invention, a 2-substituted 1,3-diether is preferred as the ether compound (B) that includes two or more ether groups. Examples of the 2-substituted 1,3-diether include a compound represented by the following general formula (3)

R⁷-O-CH₂CR⁸R⁹CH₂-O-R¹⁰ (3)

wherein R⁸ and R⁹ represent a hydrogen atom, a halogen atom, an alkyl group having 1 to 12 carbon atoms, a vinyl group, an alkenyl group having 3 to 12 carbon atoms, a cycloalkyl group or cycloalkenyl group having 3 to 12 carbon atoms, an aromatic hydrocarbon group or halogen-substituted aromatic hydrocarbon group having 6 to 12 carbon atoms, a substituted aromatic hydrocarbon group having 7 to 12 carbon atoms, an alkylamino group having 1 to 12 carbon atoms, or a dialkylamino group having 2 to 12 carbon atoms, they are the same as or different from each other and may be bonded to each other to form a ring; and R⁷ and R¹⁰ represent an alkyl group having 1 to 12 carbon atoms, a vinyl group, an alkenyl group having 3 to 12 carbon atoms, a cycloalkyl group having 3 to 6 carbon atoms, an aromatic hydrocarbon group or halogen-substituted aromatic hydrocarbon group having 6 to 12 carbon atoms, or a substituted aromatic hydrocarbon group having 7 to 12 carbon atoms, and they are the same as or different from each other.

Specific examples of the 2-substituted 1,3-diether include 2-isopropyl-2-isobutyl-1,3-dimethoxypropane, 2,2-diisobutyl-1,3-dimethoxypropane, 2-isopropyl-2-isopentyl-1,3-dimethoxypropane, 2,2-dicyclohexyl-1,3-dimethoxypropane, 2,2-bis(cyclohexylmethyl)-1,3-dimethoxypropane and 9,9-bis(methoxymethyl)fluorene. Among these, 2-isopropyl-2-isobutyl-1,3-dimethoxypropane, 2-isopropyl-2-isopentyl-1,3-dimethoxypropane, 9,9-bis(methoxymethyl)fluorene, and the like are preferably used; and these compounds may be used either alone or in combination of two or more.

The solid catalyst component (I) may include an internal electron donating compound other than the component (A) and the component (B) (hereinafter, also referred to as "component (E)"). Examples of the component (E) include alcohols, phenols, acid halides, acid amides, nitriles, acid anhydrides, ether compounds other than the component (B), organic acid esters, silicate esters, and compounds that include an ether group and an ester group.

In the solid catalyst component (I), a proportion of the ether compound (B) having two or more ether groups in a total of the carbonate compound (A) represented by the general formula (1) and the ether compound (B) having two or more ether groups is 33.0 to 80.0 mol%, preferably 33.0 to 75.0 mol%, and more preferably 35.0 to 70.0 mol%. When the proportion of the component (B) in the total of the components (A) and (B) is within the above range, this can moderately widen a molecular weight distribution of an olefin polymer in the polymerization of olefins and can enhance the catalytic activity. On the other hand, if the proportion of the component (B) to the total of the components (A) and (B) is less than the above range, the polymerization activity is not enhanced; and if it exceeds the above range, the molecular weight distribution of the olefin polymer obtained thereby would be too narrow. Note that the proportion of the component (B) in the total of the components (A) and (B) is a percentage (mol%) of a mole number of the component (B) relative to a total of a mole number of the component (A) and the mole number of the component (B).

In the solid catalyst component (I), a total of the carbonate compound (A) represented by the general formula (1) and the ether compound (B) having two or more ether groups is preferably 0.2 to 0.8 mmol/gram solid catalyst component, and more preferably 0.3 to 0.7 mmol/gram solid catalyst component. When the total of the components (A) and (B) is within the above range, a catalyst satisfies both high polymerization activity and regularity. Note that the total of the components (A) and (B) indicates a total of the mole number of the component (A) and the mole number of the component (B).

In the solid catalyst component (I), a proportion of the total of the carbonate compound (A) represented by the general formula (1) and the ether compound (B) having two or more ether groups in the entire of internal electron donating compounds is preferably 80.0 mol% or more, more preferably 90.0 mol% or more, and further preferably 100.0 mol%. When the proportion of the total of components (A) and (B) in the entire of internal electron donating compounds is within the above range, a catalyst satisfies both high polymerization activity and regularity. Note that the proportion of the total of the components (A) and (B) in the entire of internal electron donating compounds is a percentage (mol%) of the total of the mole number of the component (A) and the mole number of the component (B) relative to the total of mole numbers of the entire of internal electron donating compounds.

The solid catalyst component (I) may include a polysiloxane (hereinafter, referred to simply as "component (F)"). Use of the polysiloxane can improve the stereoregularity or the crystallinity of the resulting polymer and it can further reduce fine powder of the resulting polymer. A polysiloxane is a polymer that includes a siloxane bond (-Si-O- bond) in the main chain, and it also generically referred to as "silicone oil." The polysiloxane is a chain-like, partially hydrogenated, cyclic, or modified polysiloxane that is liquid or viscous at room temperature, and has a viscosity at 25°C of 0.02 to 100 cm²/s (2 to 10000 cSt), and more preferably 0.03 to 5 cm²/s (3 to 500 cSt).

The content of titanium, magnesium and halogen atoms in the solid catalyst component (I) is not particularly limited; however, preferably, the content of titanium is 0.1 to 10 mass%, preferably 0.5 to 8.0 mass%, and more preferably 1.0 to 5.0 mass%; the content of magnesium is 10 to 40 mass%, more preferably 10 to 30 mass%, particularly preferably 13 to 25 mass%; and the content of halogen atoms is 20 to 89 mass%, more preferably 30 to 85 mass%, and particularly preferably 40 to 75 mass%.

Further, the solid catalyst component (I) may contain a reagent that includes silicon, phosphorus, or a metal such as aluminum in addition to the above components. Examples of the reagent include an organosilicon compound that includes an Si-O-C bond, an organosilicon compound that includes an Si-N-C bond, a phosphoric acid compound that includes a P-O bond, an organoaluminum compound such as trialkylaluminum, dialkoxyaluminum chloride, alkoxyaluminum dihalide, and trialkoxyaluminum, and an aluminum trihalide. Preferred are an organosilicon compound that includes an Si-O-C bond, an organosilicon compound that includes an Si-N-C bond and an organoaluminum compound. A solid catalyst component (I) containing such a reagent is preferred since the resultant solid catalyst component is improved in terms of the polymerization activity and the stereoregularity.

Example of the organosilicon compound having an Si-O-C bond and the organosilicon compound having an Si-N-C bond are the same as the exemplary compounds and specific compounds of the organosilicon compound represented by the general formulas (5) and (6) described below, and therefore, description therefor is omitted. Further, the above organoaluminum compound is the same as specific examples of organoaluminum compound of the general formula (4) described below, and therefore, description therefor is omitted. Regarding these reagents, either one or two or more thereof may be contained.

### (Method for producing solid catalyst component (I))

A method for producing a solid catalyst component for olefin polymerization according to the present invention, comprising:
a first step of bringing a magnesium compound, a halogen-containing titanium compound, a carbonate compound (A) represented by the following general formula (1), and an ether compound (B) having two or more ether groups into contact with one another to obtain a contact product,

   R¹-O-C(=O)-O-Z-O-R² (1)
wherein R¹ and R² represent a hydrocarbon group or substituted hydrocarbon group having 1 to 24 carbon atoms, or a heteroatom-containing group, and R¹ and R² are the same as or different from each other; and Z represents a linking group that links through a carbon atom or a carbon chain;
an intermediate washing step of washing the contact product in contact with an inert organic solvent to obtain a washed matter of the contact product; and
a second step of conducting a contact treatment on the washed matter of the contact product with a mixture solution of a halogen-containing titanium compound/an inert organic solvent at least once to obtain a solid catalyst component for olefin polymerization,
wherein in the first step, a proportion of a contact amount of the ether compound (B) in a total of a contact amount of the carbonate compound (A) and the contact amount of the ether compound (B) is 25.0 to 80.0 mol%,
wherein in the second step, the mixture solution of a halogen-containing titanium compound/an inert organic solvent is obtained by mixing the halogen-containing titanium compound with the inert organic solvent such that a volume ratio of the halogen-containing titanium compound relative to the inert organic solvent (halogen-containing titanium compound/inert organic solvent) is 0.25 or more.

The first step in the method for producing a solid catalyst component for olefin polymerization according to the present invention is a step of bringing, in the presence of an inert organic solvent, a magnesium compound (C), a halogen-containing titanium compound (D), a carbonate compound (A) represented by the general formula (1) (component (A)) and an ether compound (B) having two or more ether groups (compound (B)) into contact with one another to obtain a contact product.

Examples of the magnesium compound (C) (hereinafter, referred to simply as "component (C)") include one or more magnesium compounds selected from a magnesium dihalide, a dialkyl magnesium, an alkyl magnesium halide, a dialkoxy magnesium, a diaryloxy magnesium, an alkoxy magnesium halide, and a fatty acid magnesium. Among these magnesium compounds, a magnesium dihalide, a mixture of a magnesium dihalide and a dialkoxy magnesium, and a dialkoxy magnesium are preferred; and a dialkoxy magnesium is particularly preferred. As the dialkoxy magnesium, used are one or more selected from dimethoxy magnesium, diethoxy magnesium, dipropoxy magnesium, dibutoxy magnesium, ethoxymethoxy magnesium, ethoxypropoxy magnesium, butoxyethoxy magnesium; and among these, diethoxy magnesium is particularly preferred.

Further, the dialkoxy magnesium may be a compound obtained by reacting metal magnesium with a halogen-containing organic metal or the like and an alcohol. Further, the dialkoxy magnesium may be granular or powdery, and the shape thereof may be amorphous or spherical. For example, when a spherical dialkoxy magnesium is used, polymer powder having a better particle shape and a narrow particle size distribution is likely to be obtained, the handleability and the usability of resultant polymer powder are improved at the time of polymerization, and this can easily solve the problems, for example, clogging of a filter in a separation apparatus of polymers, which is attributable to fine powder contained in resultant polymer powder.

The above spherical dialkoxy magnesium is not necessarily required to have a perfectly spherical shape, and dialkoxy magnesium having an elliptical shape or a potato shape may be used. Specifically, its particle has a circularity degree of, preferably 3 or less, more preferably 1 to 2 and further preferably 1 to 1.5. In the present invention, a circularity degree of dialkoxy magnesium particles in the present invention means an arithmetic average value obtained by photographing 500 or more dialkoxy magnesium particles with a scanning electron microscope, processing the photographed particles with image analysis software to determine the area S and the circumference length L of each particle, and calculating the circularity degree of each dialkoxy magnesium particle according to the following expression: circularity degree of each dialkoxy magnesium particle = L2/(4π × S) As a particle shape becomes close to a perfect circle, its circularity degree becomes closer to 1.

In addition, the average particle size of the dialkoxy magnesium is preferably 1 to 200 µm, more preferably 5 to 150 µm, in terms of average particle size D50 (a particle size at 50% in the volume-based cumulative particle size distribution) when measured using a laser diffraction particle size distribution analyzer. When the dialkoxy magnesium is spherical, its average particle size is preferably 1 to 100 µm, more preferably 5 to 70 µm, and further preferably 10 to 60 µm.

Further, for the particle size of the dialkoxy magnesium, it is preferred that the dialkoxy magnesium should have a narrow particle size distribution with a smaller volume of fine powder and coarse powder. Specifically, the dialkoxy magnesium contains preferably 20% or less, more preferably 10% or less, of 5 µm or smaller particles when measured using a laser diffraction particle size distribution analyzer. Further, it contains preferably 10% or less, more preferably 5% or less, of 100 µm or larger particles, when measured using a laser diffraction particle size distribution analyzer. Furthermore, when the particle size distribution thereof is expressed by ln (D90/D10) (wherein D90 represents a particle size at 90% in the volume-based particle size distribution and D10 represents a particle size at 10% in the volume-based particle size distribution), the ln is preferably 3 or less, more preferably 2 or less.

The dialkoxy magnesium may be used either alone or in combination of two or more kinds. A method for producing the above-described spherical dialkoxy magnesium is illustrated in, for example, Japanese Patent Laid-Open Nos. 58-4132, 62-51633, 3-74341, 4-368391, and 8-73388.

In the present invention, the component (C) may be used in the form of either a magnesium compound solution or a magnesium compound suspension. When the component (C) is solid, the component (C) is dissolved in a solvent that can dissolve the component (C) to prepare a magnesium compound solution, or suspended in a solvent that cannot dissolve the compound (C) to prepare a magnesium compound suspension. When the component (C) is liquid, the component (C) may be used directly as a magnesium compound solution, or may be dissolved in a solvent that can dissolve the component (C), so that it can be used as a magnesium compound solution.

Examples of the halogen-containing titanium compound (D) (hereinafter, sometimes referred to as "component (D)") include a tetravalent titanium compound represented by, for example, the general formula (7):

Ti(OR¹⁷)ⱼX₄₋ⱼ (7)

wherein R¹⁷ is a hydrocarbon group having a to 10 carbon atoms; when several OR¹⁷ groups are present, they are the same as or different from each other; X is a halogen group and when a plurality of X's is present, X's are the same as or different from each other; and j is an integer of 0 to 4.

The tetravalent titanium compound represented by the general formula (7) is one compound or two or more compounds selected from the group of alkoxy titaniums, titanium halides, and alkoxy titanium halides. Specific examples thereof include titanium tetrahalides such as titanium tetrafluoride, titanium tetrachloride, titanium tetrabromide and titanium tetraiodide; and examples of the alkoxy titanium halides include alkoxytitanium trihalides such as methoxytitanium trichloride, ethoxytitanium trichloride, propoxytitanium trichloride and n-butoxytitanium trichloride, dialkoxytitanium dihalides such as dimethoxytitanium dichloride, diethoxytitanium dichloride, dipropoxytitanium dichloride and di-n-butoxytitanium dichloride, and trialkoxytitanium halides such as trimethoxytitanium chloride, triethoxytitanium chloride, tripropoxytitanium chloride, and tri-n-butoxytitanium chloride. Among these, halogen-containing titanium compounds are preferably used; and titanium tetrahalides such as titanium tetrachloride, titanium tetrabromide, and titanium tetraiodide are preferred, and titanium tetrachloride is particularly preferred. These titanium compounds may be used either alone or in combination of two or more. Further, these tetravalent titanium compounds represented by the general formula (7) may be used after dilution with a hydrocarbon compound, a halogenated hydrocarbon compound, or the like.

If necessary, a halogen compound other than the component (D) may be brought into contact in the first step. Examples of the halogen compound other than the component (D) include tetravalent halogen-containing silicon compounds. More specific examples include: silane tetrahalides such as tetrachlorosilane (silicon tetrachloride) and tetrabromosilane; and alkoxy group-containing halogenated silanes such as methoxytrichlorosilane, ethoxytrichlorosilane, propoxytrichlorosilane, n-butoxytrichlorosilane, dimethoxydichlorosilane, diethoxydichlorosilane, dipropoxydichlorosilane, di-n-butoxydichlorosilane, trimethoxychlorosilane, triethoxychlorosilane, tripropoxychlorosilane, and tri-n-butoxychlorosilane.

The inert organic solvent used in the first step is not particularly limited. Examples thereof include: linear aliphatic hydrocarbon compounds such as hexane, heptane, and decane; branched aliphatic hydrocarbon compounds such as methylheptane; alicyclic hydrocarbon compounds such as cyclohexane, methylcyclohexane, and ethylcyclohexane; and aromatic hydrocarbon compounds such as toluene, xylene, and ethylbenzene. The inert organic solvent may be used either alone or in combination of two or more.

Among the above inert organic solvents, toluene is preferred since it easily removes alkoxy titanium, which is a by-product.

The component (A) and the component (B) used in the first step are the same as the component (A) and the component (B) of the above solid catalyst component (I), and description thereof is omitted. Further, in the first step, an internal electron donating compound (E) other than the compounds (A) and (B) may be brought into contact, if necessary. The internal electron donating compound (E) other than the compounds (A) and (B) used, if necessary, in the first step is the same as the electron donating compound (E) of the above solid catalyst component (I), and description thereof is omitted. Further, if necessary, component (F) may be brought into contact in the first step. The component (F) used, if necessary, in the first step is the same as the component (F) of the above solid catalyst component (I), and description thereof is omitted.

Then, in the first step, components (A), (B), (C) and (D), and if necessary, component (E) and/or component (F) are brought into contact with one another in the presence of an inert organic solvent, so that a contact product is obtained.

In the first step, a contact amount of the halogen-containing titanium compound (D) is preferably 1.00 to 4.00 mol, and more preferably 2.00 to 3.00 mol per 1.00 mol of the magnesium compound (C). When the contact amount of the component (D) is within the above range, a catalyst with a narrow particle size distribution is provided.

In the first step, an amount of the entire of internal electron donating compounds to be contacted is preferably 0.10 to 0.35 mol, and more preferably 0.12 to 0.30 mol per 1.00 mol of the magnesium compound (C). When the amount of the entire of internal electron donating compounds to be contacted is within the above range, a catalyst has good particle size distribution and bulk density. Note that the amount of the entire of internal electron donating compounds to be contacted indicate a total of mole numbers of the entire of internal electron donating compounds.

In the first step, the proportion of the contact amount of the ether compound (B) having two or more ether groups in the total of the contact amount of the carbonated compound (A) represented by the general formula (1) and the contact amount of the ether compound (B) having two or more ether groups is 25.0 to 80.0 mol%, preferably 30.0 to 75.0 mol%, and more preferably 35.0 to 70.0 mol%. When the proportion of the contact amount of the compound (B) in the total of the contact amounts of the compounds (A) and (B) is within the above range, this provides a solid catalyst component for olefin polymerization that allows an olefin polymer to moderately widen a molecular weight distribution and enhance the catalytic activity in the polymerization of olefins. On the other hand, when the proportion of the contact amount of the compound (B) in the total of the contact amounts of the compounds (A) and (B) is less than the above range, it is difficult to enhance the polymerization activity; and when the proportion exceeds the above range, the resultant olefin polymer will have a too narrow molecular weight distribution. Note that the proportion of the contact amount of the compound (B) in the total of the contact amounts of the compounds (A) and (B) is a percentage (mol%) of a mole number of the component (B) relative to a total of a mole number of the component (A) and the mole number of the component (B).

In the first step, the total of the contact amount of the carbonate compound (A) represented by the general formula (1) and the ether compound (B) having two or more ether groups is preferably 0.08 to 0.30 mol, and more preferably 0.10 to 0.25 mol per 1.00 mol of the magnesium compound (C). When the total of the contact amounts of the components (A) and (B) is within the above ranges, a catalyst has good particle size distribution and bulk density. Note that the total of the contact amounts of the components (A) and (B) indicates a total of a mole number of the contact amount of the component (A) and a mole number of the contact amount of the component (B).

In the first step, the proportion of the total of the contact amount of the carbonate compound (A) represented by the general formula (1) and the contact amount of the ether compound (B) having two or more ether groups in the contact amount of the entire of internal electron donating compounds is preferably 90 mol%, and more preferably 100 mol%. When the proportion of the total of the contact amounts of the components (A) and (B) in the contact amount of the entire of internal electron donating compounds, a catalyst has high polymerization activity and stereoregularity. Note that the proportion of the total of the contact amounts of the components (A) and (B) in the contact amount of the entire of internal electron donating compounds is a percentage (mol%) of the total of a mole number of the contact amount of the component (A) and a mole number of the contact amount of the component (B) relative to the total of a mole number of the contact amount of the entire of internal electron donating compounds.

In the first step, a usage amount of the inert organic solvent is not particularly limited; however, it is such an amount that a ratio of a volume of the halogen-containing titanium compound (D) to a volume of the inert organic solvent (halogen-containing titanium compound (D)/inert organic solvent) is preferably from 0.1 to 10, and more preferably from 0.2 to 5.0. When the usage amount of the inert organic solvent is within the above ranges, a catalyst has good particle distribution and bulk density.

In the first step, when polysiloxane is brought into contact, polysiloxane (F) is brought into contact in an amount of, preferably 0.01 to 100 g, more preferably 0.05 to 80 g, and further preferably 1 to 50 g per 1.00 mol of the magnesium compound (C).

In the first step, a contact temperature at which each component is brought into contact with one another is preferably 50 to 160°C, more preferably 80 to 130°C, and further preferably 95 to 115°C. When the contact temperature in the first step is within the above ranges, this can provide a solid catalyst component for production of an olefin polymer that does not reduce the polymerization activity too much and has high stereoregularity.

In the first step, examples of methods for bringing each component into contact include: a method for co-pulverizing a solid magnesium compound having no reducing property, a component (A), a component (B) and a titanium halide; a method for bringing a magnesium halide compound having an adduct such as an alcohol, a compound (A), a compound (B) and a titanium halide into contact with one another in the presence of an inert hydrocarbon solvent; a method for bringing dialkoxymagnesium, a component (A), a component (B) and a titanium halide into contact with one another in the presence of an inert hydrocarbon solvent; and a method for bringing a magnesium compound having a reducing property, a compound (A), a compound (B) and a titanium halide into contact with one another to precipitate a solid catalyst.

Hereafter, specific methods of the first step are illustrated. Note that in the following methods (1) and (2), components (A) and (B) may be used for simultaneous reaction or may be used in a consecutive manner. Further, the above contact may be performed in the presence of other reagent such as silicon, phosphorus or aluminum, or a surfactant.

(1) Method wherein metallic magnesium, butyl chloride and a dialkyl ether are reacted to synthesize an organomagnesium compound, an alkoxytitanium is brought into contact reaction with the organomagnesium compound to obtain a solid product, and the solid product is brought into contact with a component (A), a component (B) and a titanium halide simultaneously or consecutively to prepare a contact product.
(2) Method wherein an organomagnesium compound such as a dialkylmagnesium and an organoaluminum compound are brought into contact reaction with an alcohol in the presence of a hydrocarbon solvent to form a homogeneous solution, this solution is brought into contact with a silicon compound such as silicon tetrachloride to obtain a solid product, the solid product is brought into contact with a titanium halide, a compound (A) and a compound (B) in the presence of an aromatic hydrocarbon solvent and further into contact with titanium tetrachloride to prepare a contact product.

The intermediate washing step is a step of washing the contact product in contact with an inert organic solvent to obtain a washed matter of the contact product.

The intermediate washing step is washing the contact product obtained in the first step by bringing the contact product into contact with an inert organic solvent. A usage amount of the inert organic solvent in the intermediate washing step is not particularly limited, and it is appropriately determined depending on the usage amount of each component. In the intermediate washing step, a washing temperature for washing the contact product is not particularly limited and appropriately determined; however, it is in the range of 25 to 100°C, for example. In the intermediate washing step, after the contact product is brought into contact with the inert organic solvent, a washed matter of the contact product is obtained by separating a washing liquid by means of, for example, decantation or centrifugation. Further, in the intermediate washing step, the number of operations of bringing the contact product into contact with the inert organic solvent and separating a washing liquid is one or more, and it is appropriately determined.

The inert organic solvent used in the intermediate washing step is not particularly limited. Examples thereof include: linear aliphatic hydrocarbon compounds such as hexane, heptane, and decane; branched aliphatic hydrocarbon compounds such as methylheptane; alicyclic hydrocarbon compounds such as cyclohexane, methylcyclohexane, and ethylcyclohexane; and aromatic hydrocarbon compounds such as toluene, xylene, and ethylbenzene. The inert organic solvent may be used either alone or in combination of two or more. Toluene is preferred as the inert organic solvent used in the washing step.

The second step is a step of conducting a contact treatment of the washed matter of the contact product with "a mixture solution of halogen-containing titanium compound/inert organic solvent" at least once to obtain a solid catalyst component for olefin polymerization. In the second step, the washed matter of the contact product is brought into contact with a mixture solution prepared by mixing a halogen-containing titanium compound with an inert organic solvent (a mixture solution of halogen-containing titanium compound/inert organic solvent).

The "mixture solution of halogen-containing titanium compound/inert organic solvent" is a solution that allows the washed matter of the contact product to have contact with a halogen-containing titanium compound (D) to treat the contact product with the halogen-containing titanium compound (D). The mixture solution of halogen-containing titanium compound/inert organic solvent is prepared by mixing a halogen-containing titanium compound (D) with an inert organic solvent. In the preparation of the mixture solution of halogen-containing titanium compound/inert organic solvent, a halogen-containing titanium compound (D) and an inert organic solvent are mixed with each other in such a mixing ratio that a volume ratio of the halogen-containing titanium compound (D) to the inert organic solvent (halogen-containing titanium compound (D)/inert organic solvent) is 0.25 or more, preferably 0.35 to 2.00 and more preferably 0.50 to 1.00, so that a mixture solution of halogen-containing titanium compound/inert organic solvent is obtained. In the preparation of a mixture solution of halogen-containing titanium compound/inert organic solvent, when the volume ratio of the component (D) to the inert organic solvent (component (D)/inert organic solvent) is within the above ranges, this provides a solid catalyst component that allows an olefin polymer to moderately widen a molecular weight distribution and enhance the catalytic activity in the polymerization of olefins. On the other hand, in the preparation of a mixture solution of halogen-containing titanium compound/inert organic solvent, when the volume ratio of the component (D) to the inert organic solvent (component (D)/inert organic solvent) is less than the above ranges, this provides only a solid catalyst component that has a low catalytic activity for olefin polymerization.

The inert organic solvent used in the second step is not particularly limited. Examples thereof include: linear aliphatic hydrocarbon compounds such as hexane, heptane, and decane; branched aliphatic hydrocarbon compounds such as methylheptane; alicyclic hydrocarbon compounds such as cyclohexane, methylcyclohexane, and ethylcyclohexane; and aromatic hydrocarbon compounds such as toluene, xylene, and ethylbenzene. The inert organic solvent may be used either alone or in combination of two or more.

Among the above inert organic solvents, toluene is preferred since it easily removes alkoxy titanium, which is a by-product.

Note that in the present invention, the inert organic solvent used in the first step, the inert organic solvent used in the washing step and the inert organic solvent used in the second step are the same as or different from each other.

In the second step, a contact temperature at which the contact product is brought into contact with a mixture solution of halogen-containing titanium compound/inert organic solvent is preferably 50 to 160°C, more preferably 80 to 130°C, and further preferably 95 to 115°C. When the contact temperature in the contact treatment of the second step is within the above ranges, this can provide a solid catalyst component for production of an olefin polymer that does not reduce the polymerization activity too much and has high stereoregularity

In the second step, a contact treatment for bringing the washed matter of the contact product into contact with a mixture solution of halogen-containing titanium compound/inert organic solvent is performed at least once. That is, in the second step, a contact treatment for bringing the washed matter of the contact product into contact with a mixture solution of halogen-containing titanium compound/inert organic solvent is performed only once. Further, in the second step, after a first contact treatment for bringing the washed matter of the contact product into contact with a mixture solution of halogen-containing titanium compound/inert organic solvent is performed, the contact product obtained by the first contact treatment may be subjected to a washing treatment for bringing it into contact with an inert organic solvent and the matter obtained by the washing treatment may be subjected to a second contact treatment for bringing it into contact with a mixture solution of halogen-containing titanium compound/inert organic solvent (first contact treatment -> washing treatment -> second contact treatment). Furthermore, in the second step, after the first contact treatment for bringing the washed matter of the contact product into contact with a mixture solution of halogen-containing titanium compound/inert organic solvent is performed, the operation including a washing treatment and a contact treatment may be repeated twice or more on the contact product obtained by the first contact treatment (first contact treatment -> washing treatment -> second contact treatment -> ... -> washing treatment -> n-th contact treatment). The number of times of contact treatment in the second step is preferably 2 to 6.

In the second step, when washing treatment is performed, an inert organic solvent used in the washing treatment is not particularly limited. Examples of such an inert organic solvent include: linear aliphatic hydrocarbon compounds such as hexane, heptane, and decane; branched aliphatic hydrocarbon compounds such as methylheptane; alicyclic hydrocarbon compounds such as cyclohexane, methylcyclohexane, and ethylcyclohexane; and aromatic hydrocarbon compounds such as toluene, xylene, and ethylbenzene. The inert organic solvent may be used either alone or in combination of two or more. Heptane is preferred as the inert organic solvent used in the washing treatment of the second step. In the washing treatment of the second step, after the contact product obtained by a previous contact treatment is brought into contact with the inert organic solvent, a washed matter is obtained by separating a washing liquid by means of, for example, decantation or centrifugation.

Then, in the second step, contact treatment on the washed matter of the contact product with a mixture solution of halogen-containing titanium compound/inert organic solvent is carried out a predetermined number of times, thereby providing a solid catalyst component for olefin polymerization.

The solid catalyst component for olefin polymerization obtained by the second step is subjected to washing treatment, drying, classification and others in an appropriate manner, and a product of the solid catalyst component for olefin polymerization is obtained.

When a solid catalyst component for olefin polymerization according to the present invention, and a solid catalyst component for olefin polymerization obtained by conducting a method for producing a solid catalyst component for olefin polymerization according to the present invention are used for polymerization of olefins, as a solid catalyst component for olefin polymerization catalyst, this use can moderately widen a molecular weight distribution (Mw/Mn) of about 5.0 to 6.0 of the obtained olefin polymer and enhance the catalytic activity.

### (Method for producing a catalyst for olefin polymerization)

A method for producing a catalyst for olefin polymerization according to a first embodiment of the present invention is a method wherein a catalyst for olefin polymerization is obtained by bringing (I) the solid catalyst component for olefin polymerization according to the present invention or the solid catalyst component for olefin polymerization obtained by the method for producing a solid catalyst component for olefin polymerization according to the present invention; and (II) an organoaluminum compound (hereinafter, sometimes referred to simply as "component (G)") into contact with each other. A method for producing a catalyst for olefin polymerization according to a second embodiment of the present invention is a method wherein a catalyst for olefin polymerization is obtained by bringing (I) the solid catalyst component for olefin polymerization according to the present invention or the solid catalyst component for olefin polymerization obtained by the method for producing a solid catalyst component for olefin polymerization according to the present invention; (II) an organoaluminum compound (component (G)); and (III) an external electron donating compound (hereinafter, sometimes referred to simply as "component (H)") into contact with one another. Note that when the solid catalyst component for olefin polymerization of the present invention, or the solid catalyst component for olefin polymerization obtained by the method for producing a solid catalyst component for olefin polymerization of the present invention (I) includes an organosilicon compound having an Si-O-C bond, an organosilicon compound having an Si-N-C bond or an organoaluminum compound (reagent), use of the component (H) may be omitted. This is because a catalyst formed of the solid catalyst component and the organoaluminum exhibits excellent polymerization activity and hydrogen response even when the component (H) is not used.

The organoaluminum compound (II) is not particularly limited as long as it is a compound represented by the general formula (4). Note that R¹¹ is preferably an ethyl group or an isobutyl group; Q is preferably a hydrogen atom, a chlorine atom, a bromine atom, an ethoxy group, or a phenoxy group; and p is preferably 2, 2.5 or 3, and particularly preferably 3.

Specific examples of the organoaluminum compound include trialkylaluminums such as triethylaluminum, triisopropylaluminum, tri-n-butylaluminum, tri-n-hexylaluminum and triisobutylaluminum, alkylaluminum halides such as diethylaluminum chloride and diethylaluminum bromide, and diethylaluminum hydride. Among these, alkylaluminum halides such as diethylaluminum chloride; and trialkylaluminums such as triethylaluminum, tri-n-butylaluminum, and triisobutylaluminum are preferably used; and triethylaluminum and triisobutylaluminum are particularly preferred. These aluminum compounds may be used either alone or in combination.

Examples of the external electron donating compound (III) include organic compounds that include an oxygen atom or a nitrogen atom. Examples thereof include alcohols, phenols, ethers, esters, ketones, acid halides, aldehydes, amines, amides, nitriles, isocyanates, and organosilicon compounds. Among these, organosilicon compounds having an Si-O-C bond, aminosilane compounds having an Si-N-C bond and others are exemplified.

Among the above external electron donating compounds, preferred are esters such as ethyl benzoate, ethyl p-methoxybenzoate, ethyl p-ethoxybenzoate, methyl p-toluate, ethyl p-toluate, methyl anisate, and ethyl anisate, 1,3-diethers, organosilicon compounds that include an Si-O-C bond, and aminosilane compounds that include an Si-N-C bond. Particularly preferred are organosilicon compounds having an Si-O-C bond, aminosilane compounds having an Si-N-C bond and 1,3-diethers having a substituent at position 2.

Among the above external electron donating compounds (III), examples of the organosilicon compounds having an Si-O-C bond include an organosilicon compound represented by the following general formula (5).

R¹²_{q}Si(OR¹³)_{4-q} (5)

wherein R¹² is an alkyl group having 1 to 12 carbon atoms, a vinyl group, an allyl group, an aralkyl group, a cycloalkyl group having 3 to 12 carbon atoms, a phenyl group, an alkylamino group having 1 to 12 carbon atoms, or a dialkylamino group having 1 to 12 carbon atoms; q is an integer that satisfies 0<q≤3, provided that R¹²'s are the same as or different from each other when q is 2 or more; and R¹³ is an alkyl group having 1 to 4 carbon atoms, a cycloalkyl group having 3 to 6 carbon atoms, a phenyl group, a vinyl group, an allyl group, or an aralkyl group, provided that R¹³'s are the same as or different from each other.

Further, among the above external electron donating compounds (III), examples of the aminosilane compounds having an Si-N-C bond include an aminosilane compound represented by the following general formula (6).

(R¹⁴R¹⁵N)ₛSiR¹⁶₄₋ₛ (6)

wherein R¹⁴ and R¹⁵ are a hydrogen atom, an alkyl group having 1 to 20 carbon atoms, a vinyl group, an alkenyl group having 3 to 20 carbon atoms, a cycloalkyl group or cycloalkenyl group having 3 to 20 carbon atoms, or an aryl group having 6 to 20 carbon atoms, provided that R¹⁴ and R¹⁵ are the same as or different from each other and may be bonded to each other to form a ring; R¹⁶ is an alkyl group having 1 to 20 carbon atoms, a vinyl group, an alkenyl group having 3 to 12 carbon atoms, a cycloalkyl group having 3 to 20 carbon atoms, or an aryl group having 6 to 20 carbon atoms, provided that when several R¹³'s are present, they are the same as or different from each other; and s is an integer from 1 to 3.

Examples of the organosilicon compound represented by the general formula (5) or (6) include phenylalkoxysilanes, alkylalkoxysilanes, phenylalkylalkoxysilanes, cycloalkylalkoxysilanes, alkyl(cycloalkyl)alkoxysilanes, (alkylamino)alkoxysilanes, alkyl(alkylamino)alkoxysilanes, cycloalkyl(alkylamino)alkoxysilanes, tetraalkoxysilanes, tetrakis(alkylamino)silanes, alkyltris(alkylamino)silanes, dialkylbis(alkylamino)silanes, and trialkyl(alkylamino)silanes.

Further, examples of the 1,3-diethers having a substituent at position 2 include ones that are the same as the component (B) of internal electron donating compounds.

A catalyst for olefin polymerization obtained by the method for producing a catalyst for olefin polymerization according to the present invention can provide an appropriately wide molecular weight distribution of olefin polymers and increase the catalytic activity in polymerization of olefins.

### (Method for producing olefin polymer)

The method for producing an olefin polymer according to the present invention is characterized by polymerizing olefins by use of the catalyst for olefin polymerization obtained by the method for producing a catalyst for olefin polymerization according to the present invention. When olefins are polymerized by use of the catalyst for olefin polymerization obtained by the method for producing a catalyst for olefin polymerization according to the present invention, the catalyst for olefin polymerization can be provided for polymerization by isolating the catalyst for olefin polymerization and bringing the isolated catalyst into contact with olefins after the catalyst for olefin polymerization is produced by the method for producing a catalyst for olefin polymerization according to the present invention, or by bringing the catalyst for olefin polymerization directly (without isolation) into contact with olefins after the catalyst for olefin polymerization is produced by the method for producing a catalyst for olefin polymerization according to the present invention.

Polymerization of olefins may be homopolymerization or copolymerization of olefins, and it may be random copolymerization or block copolymerization.

One or more selected from include ethylene, propylene, 1-butene, 1-pentene, 4-methyl-1-pentene, vinylcyclohexane, 1-hexene, 1,5-hexadiene and others may be exemplified as olefines to be copolymerized; among these, ethylene, propylene, 4-methyl-1-pentene, 1-hexene and 1,5-hexadiene are preferred; and particularly, ethylene and propylene are preferred.

When olefines are copolymerized, for example, propylene and an olefin other than propylene are copolymerized, one or more selected from ethylene, 1-butene, 1-pentene, 4-methyl-1-pentene, vinylcyclohexane and others may be exemplified as olefines to be copolymerized with propylene; and especially, ethylene and 1-butene are preferred.

For example, when propylene and another olefin are copolymerized, examples of copolymerization include: random copolymerization of polymerizing propylene and a small amount of ethylene as a comonomer in one stage; and so-called propylene-ethylene block copolymerization including homopolymerizing propylene in a first stage (first polymerization tank) and copolymerizing propylene and ethylene in a second stage (second polymerization tank) or in multiple stages (multistage polymerization tank).

A temperature for polymerization of olefins is preferably room temperature or higher and 200°C or lower, and more preferably room temperature or higher and 100°C or lower. Note that the room temperature referred to herein means 20°C.

A pressure for polymerization of olefins is preferably 10 MPa or lower, and more preferably 6 MPa or lower.

Olefins may be polymerized by a continuous polymerization method or a batch polymerization method. Further, polymerization reaction may be performed in one stage or may be performed in multiple stages of two or more stages.

When the above olefins are subjected to a polymerization reaction, a polymerization atmosphere therefor may be any one of an inert gas atmosphere or an atmosphere of gas of olefins to be polymerized such as the above propylene.

The method for producing an olefin polymer according to the present invention provides olefin polymers having an appropriately wide molecular weight distribution (Mw/Mn) of about 5.0 to 6.0 and a high catalytic activity.

### [Examples]

The present invention is further specifically described by way of examples; however, the examples are for illustration purpose only and the present invention is not limited thereto.

In the examples and comparative examples described below, the contents of titanium atoms and the internal electron donating compound in the solid catalyst component were measured by the following methods.

### (Content of titanium atoms in solid catalyst component)

The content of titanium atoms in the solid catalyst component was determined in accordance with the method (oxidation-reduction titration) specified in JIS 8311-1997 "Method for determination of titanium in titanium ores."

### (Content of the internal electron donating compound in solid catalyst component)

The content of the internal electron donating compound in the solid catalyst component was determined using a gas chromatography (GC-2014 manufactured by Shimadzu Corporation) under the following conditions. Further, the number of moles of each component (each internal electron donating compound) was calculated from the gas chromatography measurement results using a calibration curve that was drawn in advance at known concentrations.

### <Measurement conditions>

Column: capillary column (φ0.32 × 30 m, Dimethyl Polysiloxane manufactured by Restek)
Detector: FID (Flame Ionization Detector, hydrogen flame ionization detector)
Carrier gas: helium, flow rate: 15 mL/min
Measurement temperature: vaporization chamber: 280°C,
column: 225°C and detector: 280°C, or vaporization
chamber: 265°C, column: 180°C and detector: 265°C

### (Example 1)

### <Synthesis of solid catalyst component (I)>

### (first step and washing step)

A flask with an internal volume of 500 mL, equipped with a stirrer, whose internal atmosphere was replaced with nitrogen gas, was charged with 10 g (87.4 mmol) of diethoxymagnesium, 55 mL of toluene, 20 mL of titanium tetrachloride, 9.01 mmol (1.46 g) of (2-ethoxyethyl) ethyl carbonate (EEECA) (A), and 5.80 mmol (1.26 g) of 2-isopropyl-2-isopentyl-1,3-dimethoxypropane (IIDMP) (B), which were brought into contact and reacted with one another at 100°C for 90 minutes. After completion of the reaction, the resultant contact product was washed 4 times with 75 mL of toluene at 90°C.

### (second step and washing)

A toluene solution of titanium tetrachloride having a volume ratio of titanium tetrachloride to toluene of 0.50 was newly prepared. 60 mL of the solution was added, heated to 100°C and reacted by stirring for 15 minutes; and after reaction, a supernatant liquid was removed. This operation was repeated further 3 times; then, washing was performed 6 times with 75 mL of n-heptane at 40°C; and a solid catalyst component (I) was obtained.

The content of titanium, the content of (2-ethoxyethyl) ethyl carbonate (EEECA) (A) and the content of 2-isopropyl-2-isopentyl-1,3-dimethoxypropane (IIDMP) (B) in the obtained solid catalyst component (I) were determined. Results thereof are shown in Table 1.

### <Preparation of polymerization catalyst (Y) and evaluation of propylene homopolymerization>

An autoclave with an internal volume of 2.0 L, equipped with a stirrer, whose internal atmosphere was replaced with nitrogen gas, was charged with 1.32 mmol of triethylaluminum, 0.13 mmol of cyclohexylmethyldimethoxysilane (CMDMS) and 0.0026 mmol on a titanium atom basis of the above-obtained solid catalyst component (I), and a polymerization catalyst (Y) was prepared. Thereafter, 1.5 L of hydrogen gas and 1.4 L of liquefied propylene were charged; preliminary polymerization was carried out at 20°C for 5 minutes; and the temperature was increased to carry out polymerization reaction at 70°C for 1 hour. The polymerization activity per gram of the solid catalyst component, the bulk density in the resultant polymer, the p-xylene soluble content (XS) in the resultant polymer, the melt flow rate (MFR) and the molecular weight distribution (Mw/Mn) of the resultant polymer at this time are shown in Table 1.

### <Polymerization activity per gram of solid catalyst component>

The polymerization activity per gram of the solid catalyst component was determined by the following expression. Polymerization activity (g-PP/g-catalyst) = mass (g) of polymer/mass (g) of solid catalyst component

### <Measurement of bulk density (BD)>

The bulk density of a polymer was determined in accordance with JIS K-6721:1997.

### <Measurement of xylene soluble component (XS) in polymer>

A flask equipped with a stirrer was charged with 4.0 g of the polymer (polypropylene) and 200 mL of p-xylene. The external temperature was increased to be equal to or higher than the boiling point of xylene (about 150°C), and the polymer was dissolved over 2 hours while the temperature of p-xylene in the flask was kept at the boiling point (137 to 138°C). Thereafter, the solution was cooled to 23°C over 1 hour and an insoluble component and a soluble component were separated by filtration. A solution of the soluble component was collected; p-xylene was evaporated by heating and drying under reduced pressure; and the obtained residue was regarded as the xylene soluble component (XS) and the weight thereof was determined as a value (wt.%) relative to the weight of the polymer (polypropylene).

### <Melt flow rate (MFR) of polymer>

The melt flow rate (MFR) indicating melt flow properties of the polymer was measured in accordance with ASTM D1238, JIS K 7210.

### <Measurement Of molecular weight distribution (Mw/Mn) of polymer>

The molecular weight distribution of the polymer was evaluated by the ratio (Mw/Mn) of the weight average molecular weight (Mw) to the number average molecular weight (Mn) determined by gel permeation chromatography (GPC) (Alliance GPC/V2000 manufactured by Waters) under the following conditions.
Solvent: o-dichlorobenzene (ODCB)
Measurement temperature: 140°C
Column: UT-806 × 3, HT-803 × 1 manufactured by Showa Denko K.K.
Sample concentration: 1 mg/mL-ODCB (10 mg/10 mL-ODCB)
Injection volume: 0.5 mL
Flow rate: 1.0 mL/min

### (Comparative Example 1)

### <Synthesis of solid catalyst component>

Synthesis was performed in the same manner as in Example 1 except that 2.70 mmol (0.58 g) of 2-isopropyl-2-isopentyl-1,3-dimethoxypropane (IIDMP) (B) was used instead of 5.80 mmol (1.26 g) thereof; and in the second step, the volume ratio of titanium tetrachloride to toluene in the toluene solution of titanium tetrachloride (volume ratio of titanium tetrachloride/toluene) was changed from 0.50 to 0.20, so that a solid catalyst component was obtained.

The contents of titanium, EEECA (A) and IIDMP (B) in the obtained solid catalyst component were measured. Results thereof are shown in Table 1.

### <Preparation of polymerization catalyst and evaluation of propylene homopolymerization>

Preparation and evaluation were conducted in the same manner as in Example 1. Results thereof are shown in Table 1.

### (Reference Example 1)

### <Synthesis of solid catalyst component>

Synthesis was performed in the same manner as in Example 1 except that 11.21 mmol (2.42 g) of 2-isopropyl-2-isopentyl-1,3-dimethoxypropane (IIDMP) (B) was used instead of 9.01 mmol (1.46 g) of (2-ethoxyethyl) ethyl carbonate (EEECA) (A) and 5.80 mmol (1.26 g) of 2-isopropyl-2-isopentyl-1,3-dimethoxypropane (IIDMP) (B); and in the second step, the volume ratio of titanium tetrachloride to toluene in the toluene solution of titanium tetrachloride (volume ratio of titanium tetrachloride/toluene) was changed from 0.50 to 0.20, so that a solid catalyst component was obtained. That is, only IIDMP (B) was used as the internal electron donating compound in Reference Example 1.

The contents of titanium and IIDMP (B) in the obtained solid catalyst component were measured. Results thereof are shown in Table 1.

### <Preparation of polymerization catalyst and evaluation of propylene homopolymerization>

Preparation and evaluation were conducted in the same manner as in Example 1. Results thereof are shown in Table 1.

Reference Example 1 used only IIDMP (B) as the internal electron donating compound, resulting a too narrow molecular weight distribution (Mw/Mn) of 4.5.

### (Example 2)

### <Synthesis of solid catalyst component>

Synthesis was performed in the same manner as in Example 1 except that 4.04 mmol (0.87 g) of 2-isopropyl-2-isopentyl-1,3-dimethoxypropane (IIDMP) (B) was used instead of 5.80 mmol (1.26 g) thereof, so that a solid catalyst component was obtained.

The contents of titanium, EEECA (A) and IIDMP (B) in the obtained solid catalyst component were measured. Results thereof are shown in Table 1.

### <Preparation of polymerization catalyst and evaluation of propylene homopolymerization>

Preparation and evaluation were conducted in the same manner as in Example 1. Results thereof are shown in Table 1.

### (Example 3)

### <Synthesis of solid catalyst component>

Synthesis was performed in the same manner as in Example 1 except that 5.40 mmol (1.17 g) of 2-isopropyl-2-isopentyl-1,3-dimethoxypropane (IIDMP) (B) was used instead of 5.80 mmol (1.26 g) thereof, so that a solid catalyst component was obtained.

The contents of titanium, EEECA (A) and IIDMP (B) in the obtained solid catalyst component were measured. Results thereof are shown in Table 1.

### <Preparation of polymerization catalyst and evaluation of propylene homopolymerization>

Preparation and evaluation were conducted in the same manner as in Example 1. Results thereof are shown in Table 1.

### (Example 4)

### <Synthesis of solid catalyst component>

Synthesis was performed in the same manner as in Example 1 except that: in the first step, the amount of toluene was changed from 55 mL to 37.5 mL, the amount of titanium tetrachloride was changed from 20 mL to 37.5 mL, the amount of (2-ethoxyethyl) ethyl carbonate (EEECA) (A) was changed from 9.01 mmol (1.46 g) to 12.24 mmol (1.98 g) and the amount of 2-isopropyl-2-isopentyl-1,3-dimethoxypropane (IIDMP) (B) was changed from 5.81 mmol (1.26 g) to 8.74 mmol (1.89 g); and in the second step, the volume ratio of titanium tetrachloride to toluene in the toluene solution of titanium tetrachloride (volume ratio of titanium tetrachloride/toluene) was changed from 0.50 to 1.00, so that a solid catalyst component was obtained.

The contents of titanium, EEECA (A) and IIDMP (B) in the obtained solid catalyst component were measured. Results thereof are shown in Table 2.

### <Preparation of polymerization catalyst and evaluation of propylene homopolymerization>

Preparation and evaluation were conducted in the same manner as in Example 1. Results thereof are shown in Table 2.

### (Example 5)

### <Synthesis of solid catalyst component>

Synthesis was performed in the same manner as in Example 1 except that: in the first step, the amount of toluene was changed from 55 mL to 50 mL, the amount of titanium tetrachloride was changed from 20 mL to 25 mL, the amount of (2-ethoxyethyl) ethyl carbonate (EEECA) (A) was changed from 9.01 mmol (1.46 g) to 5.24 mmol (0.85 g), and the amount of 2-isopropyl-2-isopentyl-1,3-dimethoxypropane (IIDMP) (B) was changed from 5.80 mmol (1.26 g) to 5.24 mmol (1.13 g); and in the second step, the volume ratio of titanium tetrachloride to toluene in the toluene solution of titanium tetrachloride (volume ratio of titanium tetrachloride/toluene) was changed from 0.50 to 1.00, so that a solid catalyst component was obtained.

The contents of titanium, EEECA (A) and IIDMP (B) in the obtained solid catalyst component were measured. Results thereof are shown in Table 2.

### <Preparation of polymerization catalyst and evaluation of propylene homopolymerization>

Preparation and evaluation were conducted in the same manner as in Example 1. Results thereof are shown in Table 2.

### (Example 6)

### <Synthesis of solid catalyst component>

Synthesis was performed in the same manner as in Example 1 except that: in the first step, the amount of toluene was changed from 55 mL to 50 mL, the amount of titanium tetrachloride was changed from 20 mL to 25 mL, the amount of (2-ethoxyethyl) ethyl carbonate (EEECA) (A) was changed from 9.01 mmol (1.46 g) to 5.24 mmol (0.85 g), and the amount of 2-isopropyl-2-isopentyl-1,3-dimethoxypropane (IIDMP) (B) was changed from 5.80 mmol (1.26 g) to 12.24 mmol (2.65 g); and in the second step, the volume ratio of titanium tetrachloride to toluene in the toluene solution of titanium tetrachloride (volume ratio of titanium tetrachloride/toluene) was changed from 0.50 to 1.00, so that a solid catalyst component was obtained.

The contents of titanium, EEECA (A) and IIDMP (B) in the obtained solid catalyst component were measured. Results thereof are shown in Table 2.

### <Preparation of polymerization catalyst and evaluation of propylene homopolymerization>

Preparation and evaluation were conducted in the same manner as in Example 1. Results thereof are shown in Table 2.

### (Comparative Example 2)

### <Synthesis of solid catalyst component>

Synthesis was performed in the same manner as in Example 1 except that: the amount of 2-isopropyl-2-isopentyl-1,3-dimethoxypropane (IIDMP) (B) was changed from 5.80 mmol (1.26 g) to 4.04 mmol (0.87 g); and in the second step, the volume ratio of titanium tetrachloride to toluene in the toluene solution of titanium tetrachloride (volume ratio of titanium tetrachloride/toluene) was changed from 0.50 to 0.20, so that a solid catalyst component was obtained.

The contents of titanium, EEECA (A) and IIDMP (B) in the obtained solid catalyst component were measured. Results thereof are shown in Table 3.

### <Preparation of polymerization catalyst and evaluation of propylene homopolymerization>

Preparation and evaluation were conducted in the same manner as in Example 1. Results thereof are shown in Table 3.

### (Comparative Example 3)

### <Synthesis of solid catalyst component>

Synthesis was performed in the same manner as in Example 1 except that: the amount of 2-isopropyl-2-isopentyl-1,3-dimethoxypropane (IIDMP) (B) was changed from 5.80 mmol (1.26 g) to 5.40 mmol (1.17 g); and in the second step, the volume ratio of titanium tetrachloride to toluene in the toluene solution of titanium tetrachloride (volume ratio of titanium tetrachloride/toluene) was changed from 0.50 to 0.20, so that a solid catalyst component was obtained.

The contents of titanium, EEECA (A) and IIDMP (B) in the obtained solid catalyst component were measured. Results thereof are shown in Table 3.

### <Preparation of polymerization catalyst and evaluation of propylene homopolymerization>

Preparation and evaluation were conducted in the same manner as in Example 1. Results thereof are shown in Table 3.

### (Comparative Example 4)

### <Synthesis of solid catalyst component>

Synthesis was performed in the same manner as in Example 1 except that: the amount of 2-isopropyl-2-isopentyl-1,3-dimethoxypropane (IIDMP) (B) was changed from 5.80 mmol (1.26 g) to 2.70 mmol (0.58 g); and in the second step, the volume ratio of titanium tetrachloride to toluene in the toluene solution of titanium tetrachloride (volume ratio of titanium tetrachloride/toluene) was changed from 0.50 to 0.33, so that a solid catalyst component was obtained.

The contents of titanium, EEECA (A) and IIDMP (B) in the obtained solid catalyst component were measured. Results thereof are shown in Table 3.

### <Preparation of polymerization catalyst and evaluation of propylene homopolymerization>

Preparation and evaluation were conducted in the same manner as in Example 1. Results thereof are shown in Table 3.

### (Comparative Example 5)

### <Synthesis of solid catalyst component>

Synthesis was performed in the same manner as in Example 1 except that the amount of 2-isopropyl-2-isopentyl-1,3-dimethoxypropane (IIDMP) (B) was changed from 5.80 mmol (1.26 g) to 2.70 mmol (0.58 g), so that a solid catalyst component was obtained.

The contents of titanium, EEECA (A) and IIDMP (B) in the obtained solid catalyst component were measured. Results thereof are shown in Table 3.

### <Preparation of polymerization catalyst and evaluation of propylene homopolymerization>

Preparation and evaluation were conducted in the same manner as in Example 1. Results thereof are shown in Table 3.

**[Table 1]**

| | | Example 1 | Comparative Example 1 | Reference Example 1 | Example 2 | Example 3 |
|---|---|---|---|---|---|---|
| First step | | | | | | |
| | Mg(OEt)₂(mmol) | 87.4 | 87.4 | 87.4 | 87.4 | 87.4 |
| | TiCl₄(mmol) | 182.4 | 182.4 | 182.4 | 182.4 | 182.4 |
| | TiCl₄/Mg(OEt)₂ (mol ratio) | 2.09 | 2.09 | 2.09 | 2.09 | 2.09 |
| | IIDMP(mmol) | 5.80 | 2.70 | 11.21 | 4.04 | 5.40 |
| | EEECA(mmol) | 9.01 | 9.01 | 0.00 | 9.01 | 9.01 |
| | Ratio of IIDMP in total of IIDMP and EEECA (mol%) | 39.16 | 23.06 | 100.00 | 30.96 | 37.47 |
| | (IIDMP+EEECA)/Mg(OEt)₂ (mol ratio) | 0.17 | 0.13 | 0.13 | 0.15 | 0.16 |

| Second step | | | | | | |
|---|---|---|---|---|---|---|
| | TiCl₄/solvent (volume ratio) | 0.50 | 0.20 | 0.20 | 0.50 | 0.50 |

| Solid catalyst component | | | | | | |
|---|---|---|---|---|---|---|
| | Ti (mass%) | 2.0 | 2.3 | 3.8 | 2.3 | 2.0 |
| | IIDMP (mass%) | 4.8 | 2.1 | 17.5 | 3.8 | 4.0 |
| | EEECA (mass%) | 3.8 | 7.2 | 0.0 | 5.7 | 5.3 |
| | Ratio of IIDMP in total of IIDMP and EEECA (mol%) | 48.6 | 17.9 | 100.0 | 33.3 | 36.1 |

| Evaluation result | | | | | | |
|---|---|---|---|---|---|---|
| | Catalytic activity (g-pp/g-cat) | 70800 | 51100 | 85800 | 65950 | 73050 |
| | BD(g/ml) | 0.41 | 0.40 | 0.43 | 0.40 | 0.39 |
| | MFR(g/10min.) | 15.0 | 7.9 | 14.0 | 8.0 | 6.1 |
| | XS (mass%) | 1.2 | 1.5 | 1.2 | 1.6 | 1.3 |
| | Mw/Mn | 5.1 | 5.1 | 4.5 | - | - |

**[Table 2]**

| | | Example 4 | Example 5 | Example 6 |
|---|---|---|---|---|
| First step | | | | |
| | Mg(OEt)₂(mmol) | 87.4 | 87.4 | 87.4 |
| | TiCl₄(mmol) | 342.0 | 228.0 | 228.0 |
| | TiCl₄/Mg(OEt)₂ (mol ratio) | 3.91 | 2.61 | 2.61 |
| | IIDMP(mmol) | 8.74 | 5.24 | 12.24 |
| | EEECA(mmol) | 12.24 | 5.24 | 5.24 |
| | Ratio of IIDMP in total of IIDMP and EEECA (mol%) | 41.66 | 50.00 | 70.02 |
| | (IIDMP+EEEGA)/Mg(OEt)₂ (mol ratio) | 0.24 | 0.12 | 0.20 |

| Second step | | | | |
|---|---|---|---|---|
| | TiCl₄/solvent (volume ratio) | 1.00 | 1.00 | 1.00 |

| Solid catalyst component | | | | |
|---|---|---|---|---|
| | Ti (mass%) | 3.1 | 5.5 | 3.9 |
| | IIDMP (mass%) | 5.8 | 4.1 | 8.2 |
| | EEECA (mass%) | 5.5 | 2.5 | 2.7 |
| | Ratio of IIDMP in total of IIDMP and EEECA (mol%) | 44.1 | 55.1 | 69.5 |

| Evaluation result | | | | |
|---|---|---|---|---|
| | Catalytic activity (g-pp/g-cat) | 79900 | 78800 | 88200 |
| | BD(g/ml) | 0.39 | 0.39 | 0.41 |
| | MFR(g/10min.) | 20.0 | 34.0 | 28.0 |
| | XS (mass%) | 1.9 | 4.5 | 1.8 |
| | Mw/Mn | - | - | - |

**[Table 3]**

| | | Comparative Example 2 | Comparative Example 3 | Comparative Example 4 | Comparative Example 5 |
|---|---|---|---|---|---|
| First step | | | | | |
| | Mg(OEt)₂(mmol) | 87.4 | 87.4 | 87.4 | 87.4 |
| | TiCl₄(mmol) | 182.4 | 182.4 | 182.4 | 182.4 |
| | TiCl₄/Mg(OEt)₂ (mol ratio) | 2.09 | 2.09 | 2.09 | 2.09 |
| | IIDMP(mmol) | 4.04 | 5.40 | 2.70 | 2.70 |
| | EEECA(mmol) | 9.01 | 9.01 | 9.01 | 9.01 |
| | Ratio of IIDMP in total of IIDMP and EEECA (mol%) | 30.96 | 37.47 | 23.06 | 23.06 |
| | (IIDMP+EEECA)/Mg(OEt)₂ (mol ratio) | 0.15 | 0.16 | 0.13 | 0.13 |

| Second step | | | | | |
|---|---|---|---|---|---|
| | TiCl₄/solvent (volume ratio) | 0.20 | 0.20 | 0.33 | 0.50 |

| Solid catalyst component | | | | | |
|---|---|---|---|---|---|
| | Ti (mass%) | 1.90 | 1.90 | 2.40 | 2.30 |
| | IIDMP (mass%) | 3.70 | 3.70 | 2.70 | 2.50 |
| | EEECA (mass%) | 6.20 | 6.10 | 7.00 | 6.80 |
| | Ratio of IIDMP in total of IIDMP and EEECA (mol%) | 30.9 | 31.3 | 22.4 | 21.6 |

| Evaluation result | | | | | |
|---|---|---|---|---|---|
| | Catalytic activity (g-pp/g-cat) | 54400 | 58900 | 56600 | 57700 |
| | BD(g/ml) | 0.41 | 0.41 | 0.41 | 0.42 |
| | MFR(g/10min.) | 9.0 | 9.2 | 8.8 | 8.1 |
| | XS (mass%) | 1.2 | 1.1 | 1.7 | 1.8 |
| | Mw/Mn | - | - | - | - |

## Claims

1. A solid catalyst component for olefin polymerization, containing magnesium, titanium, a halogen, a carbonate compound (A) represented by the following general formula (1), and an ether compound (B) having two or more ether groups,
R¹-O-C(=O)-O-Z-O-R² (1)
wherein R¹ and R² represent a hydrocarbon group or substituted hydrocarbon group having 1 to 24 carbon atoms, or a heteroatom-containing group, and R¹ and R² are the same as or different from each other; and Z represents a linking group that links through a carbon atom or a carbon chain,
wherein a proportion of the ether compound (B) in a total of the carbonate compound (A) and the ether compound (B) is 33.0 to 80.0 mol%.

2. The solid catalyst component for olefin polymerization according to claim 1, wherein the ether compound (B) is a 1,3-diether.

3. The solid catalyst component for olefin polymerization according to claim 1 or 2, wherein the ether compound (B) is 2-isopropyl-2-isopentyl-1,3-dimethoxypropane, 2-isopropyl-2-isobutyl-1,3-dimethoxypropane or 9,9-bis(methoxymethyl)fluorene.

4. A method for producing a solid catalyst component for olefin polymerization, comprising:
a first step of bringing a magnesium compound, a halogen-containing titanium compound, a carbonate compound (A) represented by the following general formula (1), and an ether compound (B) having two or more ether groups into contact with one another to obtain a contact product,
R¹-O-C(=O)-O-Z-O-R² (1)
wherein R¹ and R² represent a hydrocarbon group or substituted hydrocarbon group having 1 to 24 carbon atoms, or a heteroatom-containing group, and R¹ and R² are the same as or different from each other; and Z represents a linking group that links through a carbon atom or a carbon chain;
an intermediate washing step of washing the contact product in contact with an inert organic solvent to obtain a washed matter of the contact product; and
a second step of conducting a contact treatment of the washed matter of the contact product with a mixture solution of a halogen-containing titanium compound/an inert organic solvent at least once to obtain a solid catalyst component for olefin polymerization,
wherein in the first step, a proportion of a contact amount of the ether compound (B) in a total of a contact amount of the carbonate compound (A) and the contact amount of the ether compound (B) is 25.0 to 80.0 mol%,
wherein in the second step, the mixture solution of a halogen-containing titanium compound/an inert organic solvent is obtained by mixing the halogen-containing titanium compound with the inert organic solvent such that a volume ratio of the halogen-containing titanium compound relative to the inert organic solvent (halogen-containing titanium compound/inert organic solvent) is 0.25 or more.

5. The method for producing a solid catalyst component for olefin polymerization according to claim 4, wherein the total of the contact amount of the carbonate compound (A) and the contact amount of the ether compound (B) is 0.08 to 0.30 mol per 1.00 mol of the magnesium compound.

6. The method for producing a solid catalyst component for olefin polymerization according to claim 4 or 5, wherein in the second step, a number of contact treatments of the washed matter of the contact product with the mixture solution of a halogen-containing titanium compound/an inert organic solvent is 2 to 6.

7. A method for producing a catalyst for olefin polymerization, comprising:
bringing (I) the solid catalyst component for olefin polymerization according to any one of claims 1 to 3 or the solid catalyst component for olefin polymerization obtained by the method for producing a solid catalyst component for olefin polymerization according to any one of claims 4 to 6, and (II) an organoaluminum compound represented by the following general formula (4) into contact with each other, thereby obtaining a catalyst for olefin polymerization,
R¹¹pAlQ₃₋ₚ (4)
wherein R¹¹ represents an alkyl group having 1 to 6 carbon atoms, Q represents a hydrogen atom or a halogen, p is a real number that satisfies 0<p≤3, and R¹¹'s are the same as or different from each other.

8. A method for producing a catalyst for olefin polymerization, comprising:
bringing (I) the solid catalyst component for olefin polymerization according to any one of claims 1 to 3 or the solid catalyst component for olefin polymerization obtained by the method for producing a solid catalyst component for olefin polymerization according to any one of claims 4 to 6, (II) an organoaluminum compound represented by the following general formula (4), and (III) an external electron donating compound into contact with one another, thereby obtaining a catalyst for olefin polymerization,
R¹¹ₚAlQ₃₋ₚ (4)
wherein R¹¹ represents an alkyl group having 1 to 6 carbon atoms, Q represents a hydrogen atom or a halogen, p is a real number that satisfies 0<p≤3, and R¹¹'s are the same as or different from each other.

9. A method for producing an olefin polymer, comprising conducting polymerization of olefins using a catalyst for olefin polymerization obtained by the method for producing a catalyst for olefin polymerization according to claim 7 or 8.
